# EUROPEAN PATENT APPLICATION

(11) **EP 4 825 817 A1**
(43) Date of publication of application: **21.10.2026**
(21) Application number: 24910763.2
(22) Date of filing: 12.12.2024
(51) Int. Cl.: C03C 10/04, C03C 10/12

(54) **TRANSPARENT GLASS CERAMIC, SUBSTRATE GLASS, CHEMICALLY STRENGTHENED GLASS CERAMIC AND USE THEREOF**

(30) Priority: 25.12.2023 CN 202311800621
(71) Applicant: Chongqing Aureavia Hi-Tech Glass Co., Ltd., Chongqing 400713 (CN)
(72) Inventor: TIAN, Qian, Chongqing 400713 (CN); HUANG, Hao, Chongqing 400713 (CN); ZHOU, Jingpeng, Chongqing 400713 (CN); YANG, Yun, Chongqing 400713 (CN); LIU, Zhiqiang, Chongqing 400713 (CN); XIE, Xiaolan, Chongqing 400713 (CN); CHEN, Ying, Chongqing 400713 (CN)
(74) Representative: Vitillo, Giuseppe
(86) International application number: PCT/CN2024/138910
(87) International publication number: WO 2025/139832

(57) **Abstract**

A transparent glass ceramic, a substrate glass, a chemically strengthened glass ceramic and a use thereof. The composition of the transparent glass ceramic meets: the content range of each specific oxide: 18.200 ≤ Li₂O / P₂O₅ ≤ 25.500; and 14.000 ≤ 2 × Li₂O / (0.5 × ZrO₂ + CaO) < 23.000. The transparent glass ceramic is suitable for batch production of glass ceramic products of large size and meeting the requirements of a cover plate, does not crack during heat treatment, and has excellent and uniform optical performance, excellent intensity performance, and a good display effect.

## Description

### CROSS-REFERENCE TO RELATED DISCLOSURE

The present disclosure claims priority to Chinese Patent Application No. 202311800621.3, titled "TRANSPARENT GLASS CERAMIC, SUBSTRATE GLASS, CHEMICALLY STRENGTHENED GLASS CERAMIC AND USE THEREOF", filed before the China National Intellectual Property Administration on December 25, 2023, which is incorporated herein by reference in its entirety.

### TECHNICAL FIELD

The present disclosure relates to the technical field of glass-ceramic, and in particular to a transparent glass-ceramic, a base glass, a chemically strengthened glass-ceramic and use thereof.

### BACKGROUND

With the development of electronic display technology, glass has gradually replaced plastic materials and is used in a display device as a protective cover plate material. At present, there are mainly two types of cover plate glasses for protecting electronic products on the market: one is a chemically strengthened glass prepared using ordinary aluminosilicate glass as a substrate, and the other is a chemically strengthened glass-ceramic prepared by subjecting a glass-ceramic comprising a microcrystalline phase and a glassy phase to chemical strengthening treatment. Among them, since the glass-ceramic comprises a large number of nanoscale crystals that can hinder the propagation of microcracks, the overall strength performance is significantly improved compared with ordinary aluminosilicate glass.

The glass-ceramic has gradually attracted attention in the industry due to the superior strength performance thereof over ordinary glass. However, for the glass-ceramic used in a display screen with high requirements for optical display effect and strength performance, the production of a large-size glass-ceramic is extremely challenging. It is difficult to ensure the uniformity of composition and temperature field, which tends to result in products with local optical inhomogeneity or cracked glass bricks.

It should be noted that the content of this section of the present disclosure only provides background related to the present disclosure, and does not necessarily constitute the prior art or the well-known art.

### SUMMARY

In order to improve the yield, during mass production of glass-ceramics, large-size base glass bricks are usually first melted and formed on the production line. The large-size base glass bricks are then subjected to heat treatment to produce large-size glass-ceramic bricks. Subsequently, the large-size glass-ceramic bricks are subjected to cold working to obtain multiple glass-ceramic sheets with desired dimensions.

However, the existing glass-ceramic with petalite crystalline phase and lithium disilicate crystalline phase as main crystalline phases is prone to issues such as poor optical performance of the glass-ceramic brick and easy cracking of the glass-ceramic brick when put into production lines for mass production of the large-size glass-ceramic brick, such as the glass-ceramic brick with a dimension of (200 mm to 500 mm) × (100 mm to 500 mm) × (10 mm to 40 mm) in length, width, and thickness. Among them, the poor optical performance of the glass-ceramic brick is mainly manifested in that the difference in b-value between different areas of the entire brick is large, and local areas exhibit an undesired color. This results in the overall display effect of the glass-ceramic failing to meet the application requirements for display screen cover plates, thereby reducing the product qualification rate. Cracking of the glass-ceramic brick directly reduces the production yield and is not conducive to the mass production of glass-ceramic products. Furthermore, products that meet the optical performance requirements are prone to poor strength performance, especially poor drop resistance, thereby making it difficult to meet the desired strength requirements for use.

The purpose of the present disclosure is to overcome the defects existing in the prior art, such as uneven optical performance of the entire glass-ceramic brick, cracking during heat treatment, and the failure to balance strength, during the mass production of glass-ceramics (especially large-size glass-ceramic bricks), and to provide a transparent glass-ceramic, a base glass, a chemically strengthened glass-ceramic, and use thereof.

The solution provided by the present disclosure is suitable for the mass production of large-size transparent glass-ceramic bricks that meet requirements for cover plates and whose main crystalline phase is petalite crystalline phase and lithium disilicate crystalline phase. During the preparation of such large-size transparent glass-ceramic brick, i.e., when employing a large-size base glass brick for heat treatment to produce a transparent glass-ceramic brick, the glass brick does not exhibit cracking, and the prepared transparent glass-ceramic brick features excellent and uniform optical performances. Then, subjecting the prepared transparent glass-ceramic brick to cold working treatment (including cutting, CNC, polishing, etc., to obtain the desired dimension) and chemical strengthening treatment can produce a transparent chemically strengthened glass-ceramic product that meets optical performance requirements, strength performance requirements, and display effect requirements. The solution provided in the present disclosure improves the production yield and economic benefits of transparent glass-ceramics with petalite crystalline phase and lithium disilicate crystalline phase as the main crystalline phase, and facilitates the industrial mass production of the transparent glass-ceramic products.

In order to achieve the above purpose, the present disclosure provides the following technical solutions.

The present disclosure provides a transparent glass-ceramic, comprising a petalite crystalline phase and a lithium disilicate crystalline phase, wherein the petalite crystalline phase and the lithium disilicate crystalline phase have a higher weight percentage than other crystalline phases present in the transparent glass-ceramic;
based on molar percentage of oxides, a composition of the transparent glass-ceramic comprises:
SiO₂: 60.90 mol% to 72.65 mol%, Al₂O₃: 1.50 mol% to 5.00 mol%, P₂O₅: 0.85 mol% to 1.50 mol%, ZrO₂: 2.00 mol% to 4.00 mol%, Na₂O: 0.00 mol% to 1.00 mol%, K₂O: 0.00 mol% to 0.50 mol%, Li₂O: 20.00 mol% to 30.00 mol%, CaO: 0.00 mol% to 1.60 mol%, and B₂O₃: 0.00 mol% to 1.00 mol%;
based on a content expressed as the molar percentage of each oxide in the composition of the transparent glass-ceramic, the composition of the transparent glass-ceramic satisfies: $18.200 \leq {Li}_{2} O / {P}_{2} {O}_{5} \leq 25.500 ;$ and $14.000 \leq 2 \times {Li}_{2} O / \left(0.5\times {ZrO}_{2}+CaO\right) \leq 23.000 .$ The content of oxides and the relationship between the specific content of oxides under the specific conditions satisfied by the technical solution of the present disclosure can not only ensure the formation of petalite and lithium disilicate as the main crystalline phase, but also avoid issues such as overall bluish, hazy, or even cracking of the glass-ceramic brick during the preparation of glass-ceramic brick from large-size base glass brick while ensuring good melting conditions of the base glass brick. This is beneficial for the transparent glass-ceramic to obtain excellent optical performance and strength, so that the overall display effect of the transparent glass-ceramic can meet the application requirements of display screen cover plates. Meanwhile, after the transparent glass-ceramic of the present disclosure is subjected to chemical strengthening treatment, a chemically strengthened glass-ceramic with high strength can be obtained.

In some embodiments, based on the content expressed as the molar percentage of each oxide in the composition of the transparent glass-ceramic, the composition of the transparent glass-ceramic satisfies: $4.100 \leq \left({Li}_{2}O+{Na}_{2}O+{K}_{2}O+{B}_{2}{O}_{3}\right) / \left({P}_{2}{O}_{5}+{ZrO}_{2}+CaO\right) \leq 6.000 ;$ and/or, $0.100 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 0.900 ,$ preferably 0.190 ≤ P₂O₅ × (CaO + ZrO₂ + Li₂O + Al₂O₃) / (Na₂O + K₂O + B₂O₃) ≤ 0.900. By making the composition satisfy at least one of the above relationships, it is beneficial to further optimize the network structure and crystalline phase structure of the transparent glass-ceramic, thereby facilitating facilitate the formation of a transparent glass-ceramic with a specific structure and excellent performance (especially optical performance, strength performance, etc.).

It should be pointed out that in the above formulas of the present disclosure, the molar percentage of the contents are substituted into each formula, meaning the molar unit does not participate in the calculation of the formula. For example, if the molar percentage of the content of P₂O₅ is 0.85%, then 0.85% is substituted into the formula for calculation.

In some embodiments, based on the molar percentage of oxides, the composition of the transparent glass-ceramic comprises:
SiO₂: 67.50 mol% to 71.00 mol%, Al₂O₃: 3.50 mol% to 5.00 mol%, P₂O₅: 0.85 mol% to 1.50 mol%, ZrO₂: 2.50 mol% to 3.50 mol%, Na₂O: 0.00 mol% to 1.00 mol%, K₂O: greater than 0.00 mol% and not greater than 0.50 mol%, Li₂O: 20.00 mol% to 25.00 mol%, CaO: greater than 0.50 mol% and not greater than 1.60 mol%, and B₂O₃: 0.00 mol% to 1.00 mol%. By adjusting the content relationships of the necessary oxides, it is beneficial to further optimize the network structure of the transparent glass-ceramic, thereby helping to ensure the mass production effect of large-size transparent glass-ceramics and the excellent optical and strength performances of the mass-produced products.

In some embodiments, the transparent glass-ceramic does not comprise a quartz crystalline phase. By avoiding the precipitation of a quartz crystalline phase in the transparent glass-ceramic with petalite crystalline phase and lithium disilicate crystalline phase as the main crystalline phase, it is beneficial to further ensure the optical performance and overall uniformity of the transparent glass-ceramic.

In some embodiments, a crystallinity of the transparent glass-ceramic is ≥ 70.00 wt%, preferably the crystallinity of the transparent glass-ceramic is ≥ 80.00 wt%. In the transparent glass-ceramic, an average crystal size is less than or equal to 100 nm. A higher content of the microcrystalline phase is beneficial to improve the mechanical strength performance of the glass-ceramic, while a smaller average crystal size is beneficial to ensure the excellent optical performance of the transparent glass-ceramic.

In some embodiments, in the transparent glass-ceramic, the petalite crystalline phase accounts for 35.00 wt% to 50.00 wt% of a mass of the transparent glass-ceramic, and the lithium disilicate crystalline phase accounts for 35.00 wt% to 50.00 wt% of the mass of the transparent glass-ceramic. By adjusting the petalite crystalline phase and the lithium disilicate crystalline phase to satisfy an appropriate proportional relationship, it is beneficial to form a specific microstructure, thereby helping to ensure that the transparent glass-ceramic has high mechanical strength and fracture toughness.

In some embodiments, the transparent glass-ceramic further comprises one or more selected from the group consisting of a lithium metasilicate crystalline phase, a lithium phosphate crystalline phase, and a spodumene crystalline phase as a secondary crystalline phase.

In some embodiments, in the transparent glass-ceramic, the secondary crystalline phase accounts for less than or equal to 30.00 wt% of the mass of the transparent glass-ceramic, preferably the secondary crystalline phase accounts for less than or equal to 10.00 wt% of the mass of the transparent glass-ceramic. By controlling the content of the secondary crystalline phase to be low, it is more beneficial to ensure the high content of the main crystalline phase, thereby helping to ensure the excellent mechanical strength performance of the transparent glass-ceramic.

In some embodiments, when the transparent glass-ceramic has a dimension of (200 mm to 500 mm) × (100 mm to 500 mm) × (10 mm to 40 mm) in length, width, and thickness, a difference between a maximum b-value and a minimum b-value at nine locations on a main surface of the transparent glass-ceramic is ≤ 2.00, preferably ≤ 1.50, and more preferably ≤ 1.00. A smaller difference between the maximum b-value and the minimum b-value measured at nine locations on the main surface of the transparent glass-ceramic meeting this dimension indicates better overall uniformity and better optical effect of the transparent glass-ceramic of the present disclosure when produced to this dimension, thereby helping to ensure that the glass-ceramic sheets cut out meet the requirements for excellent optical performance and display effect.

The nine locations are respectively:
(1) four locations corresponding to test circles I tangent to the long sides and the adjacent short sides of the main surface; (2) four locations corresponding to test circles II each centered at points on line segments connecting centers of the four test locations of test circles I, the points being closest to midpoints of long sides or short sides of the main surface; (3) one location corresponding to test circle III centered at a center point of the main surface.

In some embodiments, when the transparent glass-ceramic has a dimension of (45 mm to 450 mm) × (45 mm to 350 mm) × (0.4 mm to 2.0 mm) in length, width, and thickness, the difference between the maximum b-value and the minimum b-value at nine locations on the main surface of the transparent glass-ceramic is ≤ 0.30, preferably ≤ 0.10, and more preferably ≤ 0.06. The nine locations are respectively: (1) four locations corresponding to test circles I tangent to the long sides and the adjacent short sides of the main surface; (2) four locations corresponding to test circles II each centered at points on line segments connecting centers of the four test locations of test circles I, the points being closest to midpoints of long sides or short sides of the main surface; (3) one location corresponding to test circle III centered at a center point of the main surface.

A smaller difference between the maximum b-value and the minimum b-value at the nine locations on the main surface of the glass-ceramic sheet of this dimension indicates better overall uniformity and better overall display effect of the transparent glass-ceramic of the present disclosure.

In some embodiments, when a thickness of the transparent glass-ceramic is 0.6 mm, the b-value is ≤ 1.00, preferably the b-value is ≤ 0.70, a haze is ≤ 0.25%, preferably the haze is ≤ 0.18%, and a transmittance of the transparent glass-ceramic at a wavelength of 550 nm is ≥ 90.00%.

Preferably, when the thickness of the transparent glass-ceramic is 0.6 mm, the b-value is ≤ 0.60, the haze is ≤ 0.16%, and the transmittance of the transparent glass-ceramic at a wavelength of 550 nm is ≥ 90.50%. The higher the transmittance and the smaller the b-value and haze, indicating that the optical performance of the transparent glass-ceramic is better.

The present disclosure further provides a base glass capable of being subjected to heat treatment to prepare the transparent glass-ceramic according to any one of the above embodiments, wherein based on molar percentage of oxides, a composition of the base glass comprises:
SiO₂: 60.90 mol% to 72.65 mol%, Al₂O₃: 1.50 mol% to 5.00 mol%, P₂O₅: 0.85 mol% to 1.50 mol%, ZrO₂: 2.00 mol% to 4.00 mol%, Na₂O: 0.00 mol% to 1.00 mol%, K₂O: 0.00 mol% to 0.50 mol%, Li₂O: 20.00 mol% to 30.00 mol%, CaO: 0.00 mol% to 1.60 mol%, and B₂O₃: 0.00 mol% to 1.00 mol%;
based on a content expressed as molar percentage of each oxide in the composition of the base glass, the composition of the base glass satisfies: $18.200 \leq {Li}_{2} O / {P}_{2} {O}_{5} \leq 25.500 ;$ and $14.000 \leq 2 \times {Li}_{2} O / \left(0.5\times {ZrO}_{2}+CaO\right) \leq 23.000 .$ By enabling the base glass to meet the above composition requirements, not only can good melting conditions for the base glass brick be ensured, but also a transparent glass-ceramic brick with petalite crystalline phase and lithium disilicate crystalline phase as the main crystalline phases, and having good overall uniformity, good display effect, excellent optical performance, and excellent mechanical performance can be prepared, thereby helping to improve the mass production yield of the glass-ceramic in this system.

In some embodiments, based on the content expressed as the molar percentage of each oxide in the composition of the base glass, the composition of the base glass satisfies: $4.100 \leq \left({Li}_{2}O+{Na}_{2}O+{K}_{2}O+{B}_{2}{O}_{3}\right) / \left({P}_{2}{O}_{5}+{ZrO}_{2}+CaO\right) \leq 6.000 ;$ and/or, $0.100 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 0.900 ,$ preferably 0.190 ≤ P₂O₅ × (CaO + ZrO₂ + Li₂O + Al₂O₃) / (Na₂O + K₂O + B₂O₃) ≤ 0.900. By making the composition satisfy at least one of the above relationships, it is beneficial to further optimize the network structure of the glass, thereby facilitating the formation of a transparent glass-ceramic with a specific structure and excellent performance (especially optical performance, strength performance, etc.).

In some embodiments, as tested by simultaneous thermal analysis, under a protective atmosphere of nitrogen, the base glass is heated from room temperature to 900 °C at a heating rate of 10 °C/min to obtain a heating DSC curve. In this heating DSC curve, at least two exothermic peaks are observed, wherein the first exothermic peak temperature T₁ is 600 °C to 730 °C, the second exothermic peak temperature T₂ is 740 °C to 800 °C, and T₁ and T₂ satisfy the relational expression: 100°C ≥ T₂ - T₁ ≥ 40°C, preferably 80°C ≥ T₂ - T₁ ≥ 50°C. The large-sized base glass bricks employing a base glass formulation satisfying specific DSC curve characteristics, when subjected to heat treatment under the process conditions of mass production line for glass-ceramics, can produce transparent glass-ceramic bricks with optical performance and display effects meeting the application requirements for display screens. This can well solve the issues in the prior art during mass production of the glass-ceramic bricks, such as cracking of the glass brick, significant differences in b-values between different areas of the glass brick, locally presenting undesired colors, uneven coloration, and poor display performance.

In some embodiments, as tested by simultaneous thermal analysis, under a protective atmosphere of nitrogen, the base glass is heated from room temperature to 1400 °C at a heating rate of 10 °C/min, held for 10 min, and then cooled from 1400 °C to 450 °C at a cooling rate of 10 °C/min to obtain a cooling DSC curve. In the cooling DSC curve, a sum of integrated areas of an exothermic peak and an endothermic peak comprised therein within a range of 500 °C to 900 °C is S, and S ≤ 10, preferably no endothermic peak and/or no exothermic peak is present, more preferably S = 0. The large-sized base glass bricks employing a base glass formulation satisfying specific DSC curve characteristics, when subjected to heat treatment under the process conditions of mass production line for glass-ceramics, can produce transparent glass-ceramic bricks with optical performance and display effects meeting the application requirements for display screens. This can well solve the issues in the prior art during mass production of the glass-ceramic bricks, such as cracking of the glass brick, significant differences in b-values between different areas of the glass brick, locally presenting undesired colors, uneven coloration, and poor display performance.

In some embodiments, the base glass is heated from room temperature to a temperature of T₁₋₃₀ at a heating rate of 10 °C/min and held for 240 min for treatment, and in the product obtained after treatment, the content of the quartz crystalline phase is less than 15 wt%; wherein T₁₋₃₀ = T₁-30 °C.

In some embodiments, the base glass is heated from room temperature to a temperature of T₁₋₆₀ at a heating rate of 10 °C/min and held for 240 min for treatment, and in the product obtained after treatment, a content of the quartz crystalline phase is less than 5 wt%, preferably no quartz crystalline phase is present; wherein T₁₋₆₀ = T₁-60 °C.

The base glass meeting the content requirement of the specific quartz crystalline phase after heat treatment at the temperature of T₁₋₃₀ and/or T₁₋₆₀ can effectively avoid the precipitation of a quartz crystalline phase that affects the optical performance of the glass-ceramic in the target glass-ceramic brick when the target glass-ceramic is prepared by heat treatment, thereby ensuring ensure that the large-size transparent glass-ceramic brick meeting the use requirements can be produced in mass production.

The present disclosure further provides a chemically strengthened glass-ceramic, wherein a composition at a center of the chemically strengthened glass-ceramic is the same as the composition of the transparent glass-ceramic according to any one of the above embodiments, and the chemically strengthened glass-ceramic comprises a compressive stress layer region extending from the surface of the transparent glass-ceramic to a compression depth, and has tensile stress inside the chemically strengthened glass-ceramic. By forming a compressive stress layer on the surface of the transparent glass-ceramic, it is beneficial to further improve the mechanical performance of the transparent glass-ceramic.

In some embodiments, the chemically strengthened glass-ceramic is obtained by subjecting the transparent glass-ceramic according to any one of the above embodiments to chemical strengthening treatment, wherein a salt bath for the chemical strengthening treatment is a mixed molten salt, and the composition of the mixed molten salt comprises: 0 < NaNO₃ < 100 wt%, 0 < KNO₃ < 100 wt%, and 0 < LiNO₃ ≤ 0.2 wt%.

Preferably, a temperature of the salt bath for the chemical strengthening treatment is 430 °C to 530 °C, and a time of the chemical strengthening treatment is 0.5 h to 15.0 h. By employing the above-mentioned strengthening process for chemical strengthening, it is beneficial to optimize the chemical strengthening efficiency and ensure that the chemically strengthened glass-ceramic obtains a desired stress level.

In some embodiments, a surface Na₂O concentration of the chemically strengthened glass-ceramic is 5.0 wt% to 20.0 wt%. By enabling the surface Na₂O concentration meet the above range, it can not only ensure that the chemically strengthened glass-ceramic has a relatively excellent surface stress level, but also ensure that the chemically strengthened glass-ceramic has good weather resistance and chemical durability.

In some embodiments, the chemically strengthened glass-ceramic has a CS_50 of 110 MPa to 200 MPa, wherein the CS_50 refers to the compressive stress value at a depth of 50 µm from the main surface of the chemically strengthened glass-ceramic. The CS_50 of the chemically strengthened glass-ceramic being within the above range indicates that the compressive stress at a depth of 50 µm from the surface of the chemically strengthened glass-ceramic is high, meaning the chemically strengthened glass-ceramic has a high surface stress level. A higher surface compressive stress level can offset more residual energy from drop impacts, thereby ensuring its excellent damage resistance.

In some embodiments, the chemically strengthened glass-ceramic has a |CT_AV| of 84 MPa to 140 MPa, wherein the |CT_AV| refers to an absolute value of an average tensile stress. The |CT_AV| of the chemically strengthened glass-ceramic being within the above range indicates that the chemically strengthened glass-ceramic has a high tensile stress level, reflecting that it has a high surface stress level. A higher surface compressive stress level can offset more residual energy from drop impacts, thereby ensuring its excellent damage resistance.

In some embodiments, a depth of the compressive stress layer DOL_0 of the chemically strengthened glass-ceramic is 0.18t to 0.25t, wherein t is a thickness of the chemically strengthened glass-ceramic. The DOL_0 of the chemically strengthened glass-ceramic being within the above range indicates that the chemically strengthened glass-ceramic has a high depth of the compressive stress layer, which is more beneficial for it to offset the energy driving crack propagation, thereby ensuring its excellent damage resistance.

In some embodiments, the chemically strengthened glass-ceramic with a thickness of 0.6 mm is subjected to multiple fixed-point height drop tests by using a 120-mesh sandpaper. The fixed-point height for the test is 1.0 m. A number of drops until breakage for the chemically strengthened glass-ceramic is ≥ 30, and preferably ≥ 50. In the fixed-point height drop test, the greater the number of drops until breakage, the better the drop and damage resistance of the chemically strengthened glass-ceramic.

The present disclosure further provides a preparation method of the transparent glass-ceramic according to any one of the above embodiments, comprising the step of: subjecting the base glass according to any one of the above embodiments to heat treatment to prepare the transparent glass-ceramic.

The heat treatment according to the present disclosure comprises a nucleation treatment and a crystallization treatment, wherein a temperature of the nucleation treatment is (Tg-20 °C) to (Tg+40 °C), a time of the nucleation treatment is 0 min to 6000 min, a temperature of the crystallization treatment is (T₁-20 °C) to (T₁+20 °C), and a time of the crystallization treatment is 30 min to 6000 min. Tg is the glass transition temperature of the base glass.

Preferably, the heating rate during the heat treatment process is 5 °C/min to 15 °C/min.

The present disclosure further provides a glass device, comprising the transparent glass-ceramic according to any one of the above embodiments or comprising the chemically strengthened glass-ceramic according to any one of the above embodiments.

The present disclosure further provides an electronic device, comprising the transparent glass-ceramic according to any one of the above embodiments or the chemically strengthened glass-ceramic according to any one of the above embodiments.

The embodiments of the present disclosure have the following advantages or beneficial effects.

By optimizing the glass formulation, the present disclosure employs a glass composition that meets specific composition requirements, particularly the content of oxides and the relationship between the specific content of oxides under the specific conditions. This can solve the issue that glass-ceramic bricks tend to crack during the mass production of large-size transparent glass-ceramics with petalite and lithium disilicate as the main crystalline phase. Meanwhile, it can ensure that the prepared transparent glass-ceramics have both excellent optical and strength performances, and ensure that the display effect can meet the requirements.

Among them, the content of oxides and the relationship between the specific content of oxides under the specific conditions satisfied by the technical solution of the present disclosure can not only ensure the formation of petalite and lithium disilicate as the main crystalline phase, but also avoid issues such as overall bluish, hazy, or even cracking of the glass-ceramic brick during the preparation of glass-ceramic brick from large-size base glass brick while ensuring good melting conditions of the base glass brick. This is beneficial for the transparent glass-ceramic to obtain excellent optical performance and strength, so that the overall display effect of the transparent glass-ceramic can meet the application requirements of display screen cover plates. Meanwhile, after the transparent glass-ceramic of the present disclosure is subjected to chemical strengthening treatment, a chemically strengthened glass-ceramic with high strength can be obtained, which has been verified to have excellent drop resistance.

It has been verified that under the large-size dimension, the difference between the maximum b-value and the minimum b-value at nine locations on the main surface of the transparent glass-ceramic prepared by the technical solution of the present disclosure is ≤ 2.00; under the small-size dimension, the difference between the maximum b-value and the minimum b-value at nine locations on the main surface of the transparent glass-ceramic prepared by the technical solution of the present disclosure is ≤ 0.30, preferably ≤ 0.10. This indicates that whether it is a large-size dimension or a small-size dimension, the difference in b-values between different areas on the main surface of the transparent glass-ceramic of the present disclosure is small, the optical performance of the transparent glass-ceramic is good, and the overall display effect can meet the application requirements of display screen cover plates. Furthermore, under the large-size dimension, the glass-ceramic can achieve uniform b-values, which help to ensure a high product yield.

According to the present disclosure, the large-sized base glass bricks employing a base glass formulation satisfying specific DSC curve characteristics, when subjected to heat treatment under the process conditions of mass production line for glass-ceramics, can produce transparent glass-ceramic bricks with optical performance and display effects meeting the application requirements for display screens. This can well solve the issues in the prior art during mass production of the glass-ceramic bricks, such as cracking of the glass brick, significant differences in b-values between different areas of the glass brick, locally presenting undesired colors, uneven coloration, and poor display performance. Therefore, before preparing large-sized glass-ceramic bricks, small glass samples can be prepared according to the glass formulation. Based on the obtained DSC curve characteristics, it can be verified in advance whether the glass composition is suitable for producing large-sized glass-ceramic products, especially qualified large-thickness glass-ceramic products. If not, adjustments can be made in a timely manner until the specific DSC curve characteristics are satisfied, and then the preparation of large-sized products can be carried out. This can greatly save time and costs and effectively avoid the waste of resources.

### BRIEF DESCRIPTION OF THE DRAWINGS

In order to more clearly illustrate the technical solutions of the embodiments of the present disclosure, the following will briefly introduce the drawings needed in the embodiments. It should be understood that the following drawings only show certain embodiments of the present disclosure and therefore should not be considered as limiting the scope. For those of ordinary skill in the art, other related drawings can be obtained based on these drawings without creative effort.
FIG. 1 is a cooling DSC curve of the base glass of Example 1.
FIG. 2 is a cooling DSC curve of the base glass of Comparative Example 4.
FIG. 3 is a heating DSC curve of the base glass of Example 1.
FIG. 4 is a heating DSC curve of the base glass of Example 22.
FIG. 5 is a heating DSC curve of the base glass of Comparative Example 1.
FIG. 6 is a heating DSC curve of the base glass of Comparative Example 2.
FIG. 7 is an XRD diffraction pattern of the product obtained after the base glass of Example 3 was subjected to heat treatment process A (the temperature of crystallization was T₁₋₆₀, and the time of the crystallization treatment was 240 min).
FIG. 8 is an XRD diffraction pattern of the product obtained after the base glass of Comparative Example 2 was subjected to heat treatment process A (the temperature of crystallization was T₁₋₆₀, and the time of the crystallization treatment was 240 min).
FIG. 9 is an XRD diffraction pattern of the glass-ceramic obtained after the base glass of Example 3 was subjected to heat treatment process B.
FIG. 10 is an XRD diffraction pattern of the glass-ceramic obtained after the base glass of Comparative Example 2 was subjected to heat treatment process B.

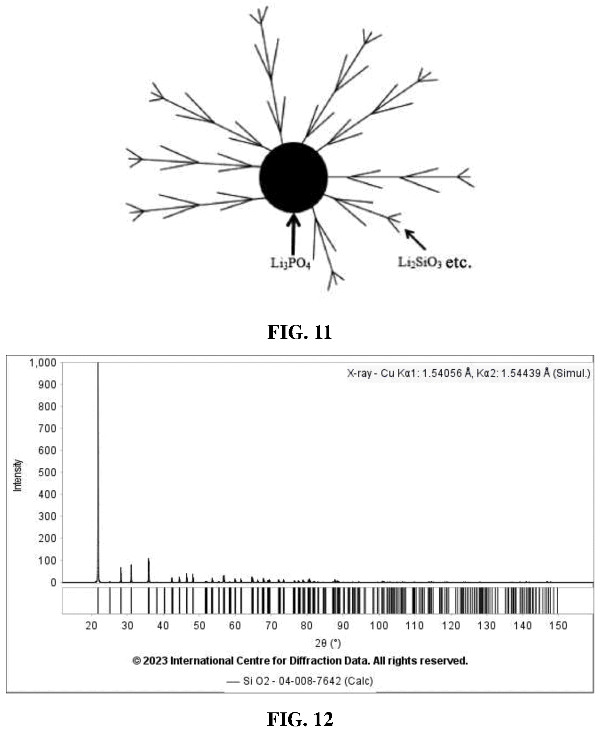

FIG. 11 is a schematic diagram of the structure of a Li₃PO₄ crystal attached with lithium metasilicate crystals.
FIG. 12 is a standard XRD diffraction pattern for quartz appearing in glass-ceramics.
FIG. 13 is a schematic diagram of nine test locations for testing b-values at nine locations on the main surface of a glass-ceramic, where the circles in the figure all represent the locations of the test circles.
FIG. 14 is a schematic diagram of an uneven coloration state of a glass-ceramic.
FIG. 15 is a comparison of XRD diffraction curves between the location with the maximum b-value and the location with the minimum b-value from b-values at nine locations tests for the glass-ceramic sheet with the thickness of 0.6 mm of Example 1.
FIG. 16 is a comparison of XRD diffraction curves between the location with the maximum b-value and the location with the minimum b-value from b-values at nine locations tests for the glass-ceramic sheet with the thickness of 0.6 mm of Comparative Example 6 (which is uneven coloration).
FIG. 17 is a transmittance curve of the glass-ceramic with a thickness of 0.6 mm obtained after the base glass of Example 6 was subjected to heat treatment process B.
FIG. 18 is a transmittance curve of the glass-ceramic with a thickness of 0.6 mm obtained after the base glass of Comparative Example 4 was subjected to heat treatment process B.
FIG. 19 is a picture of the base glass brick of Comparative Example 9.
FIG. 20 is a picture of the cracked glass-ceramic brick obtained after the base glass brick of Comparative Example 7 was subjected to heat treatment process B.

### DETAILED DESCRIPTION OF THE INVENTION

In this disclosure, the endpoints and any values of the disclosed ranges are not limited to the precise ranges or values and should be understood to include values close to these ranges or values. For numerical ranges, the endpoint values between different ranges, the endpoint values of each range and individual point values, and individual point values can be combined with each other to obtain one or more new numerical ranges, which should be considered as specifically disclosed herein. Among them, the terms "optional", "alternative" both mean may be included or may not be included (or may be present or may not be present). The term "and/or" used herein is inclusive, for example "A and/or B" means only A, or only B, or both A and B.

### Term Explanation and Test Methods:

Base glass: Also refers to substrate glass, refers to a glass that has not been subjected to nucleation treatment, crystallization treatment, and strengthening treatment.

Glass-ceramic: Also refers to glass ceramic or microcrystalline glass, is a type of solid composite material comprising both a glassy phase and a crystal phase (also known as microcrystalline phase, or crystalline phase).

Transparent glass-ceramic: Refers to a glass-ceramic that is transparent within the visible light range.

Chemically strengthened glass-ceramic: Refers to a solid composite material obtained after subjecting a glass-ceramic to a chemical strengthening treatment.

In the present disclosure, during a high-temperature chemical strengthening treatment, alkali metal ions with a larger ionic radius (such as potassium ions, and sodium ions) in a molten salt bath will replace those alkali metal ions with a smaller ionic radius (such as sodium ions, and lithium ions) in the glass-ceramic, resulting in a volume difference in the exchanged ions and creating compression stress on the surface of the glass-ceramic.

Main crystalline phase: Refers to the crystalline phase that has a higher weight content than other crystalline phases present in the transparent glass-ceramic.

Main surface: Refers to the surface with the largest surface area on a glass brick or glass sheet, for example, the upper surface or lower surface of a horizontally placed cover plate glass.

Transmittance: Refers to a ratio of radiant energy that is projected onto and transmitted through an object to the total radiant energy projected onto the object during the process where incident luminous flux enters from the illuminated surface or medium incident surface and exits from the other surface.

b-value: Belongs to the Lab color model, a color mode formulated by the International Commission on Illumination, the positive or negative of the b-value represents yellow-blue color.

Haze: Haze is the percentage of transmitted light intensity deviating by 2.5 ° or more from the incident light to the total transmitted light intensity.

Nucleation: Refers to a process which allows growth of small crystal nucleus of nucleating substances in glass by heat treatment.

Crystallization: Refers to a process which allows growth of a given crystal on the basis of the crystal nucleus by heat treatment.

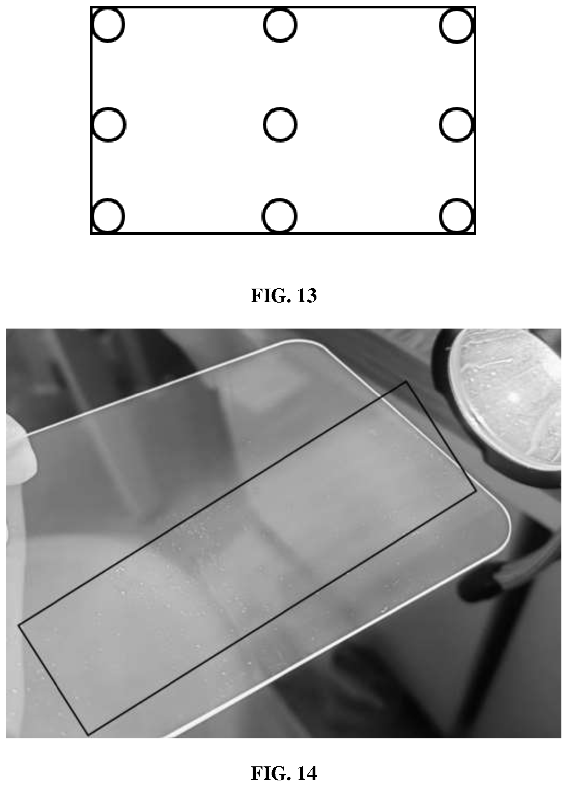

Uneven coloration: Refers to the situation that when strong light shines into the glass sheet from the side, the main surface of the glass sheet exhibits local coloration and/or uneven overall coloration of the glass sheet, as shown in FIG. 14. Products with uneven coloration are defined as defective products during production because they cannot meet the display usage requirements for display screen cover plate glass.

Precursor: A form of existence before obtaining the target product.

Glass transition temperature: Tg, unit °C, also refers to the brittle temperature of glass. It is the highest temperature at which glass exhibits brittleness, corresponding to a viscosity of 10¹² Pa ·s, also refers to the annealing upper limit temperature. At this temperature, internal stresses in glass products caused by uneven cooling can be eliminated. In the present disclosure, Tg is obtained from the heating DSC curve of the base glass, manifested on the DSC curve as a step where the baseline changes toward the endothermic direction. Tangents are drawn to the inflection points of the two extended baselines before and after the step and the curve, respectively, then the average of the temperatures corresponding to the two intersection points is the glass transition temperature.

CS_50: Refers to a compressive stress value at a depth of 50 µm from the main surface of the chemically strengthened glass-ceramic.

DOL_0: A depth of the compression stress layer, also refers to a depth of the compressive stress layer, and refers to a distance from any surface of the glass to a position close to that surface where the compressive stress is zero.

|CT_AV|: Refers to an absolute value of the average tensile stress in the tensile stress layer, and specifically refers to the absolute value of the average value of all tensile stress in the tensile stress layer.

Test conditions for CS_50, |CT_AV|, DOL_0: The tests are performed using Japan's ORIHARA SLP-2000, with a light source wavelength of 518 nm, SOC = 25.5 (nm/cm)/MPa, refractive index = 1.54, exposure time: 300 µsec.

When testing surface CS_50, |CT_AV|, DOL_0, it is necessary to first drop a refractive solution onto the stress meter, then wipe the chemically strengthened glass-ceramic sample to be tested clean and place it on the test path to test its stress value. The stress meter is SLP-2000 and the refractive solution used therewith has a refractive index of 1.51.

Optical performance test for glass-ceramics with a thickness of 2 mm or more: The YJD-3600C haze meter is used to test b-values at different positions on the main surface of the glass-ceramic to obtain the data of the difference between the maximum b-value and the minimum b-value at nine locations and the average data of b-values. In the present disclosure, the YJD-3600C haze meter used has a test aperture of 16.5 mm. This instrument complies with ASTM D1003/D1044, and ISO13468/ISO14782 dual standards. For accuracy, this test method is suitable for testing glass-ceramics with a thickness of 2 mm or more. In the present disclosure, the transmission mode of the YJD-3600C haze meter is selected for optical performance test of glass-ceramics.

Optical performance test for glass-ceramics with a thickness of 2 mm or less: In the present disclosure, a Konica Minolta spectrophotometer CM-3600A from Japan is used to test the haze, L-value, a-value, and b-value of the glass-ceramic. The spectrophotometer CM-3600A used has a test aperture of 25.6 mm. In the present disclosure, a Shimadzu UV-2000 ultraviolet-visible spectrophotometer is used to test transmittance and its curve. For accuracy, this test method is suitable for testing glass sheets with a thickness of 2 mm or less. In the present disclosure, the transmission mode of the spectrophotometer CM-3600A is selected for optical performance test of glass-ceramics.

Simultaneous thermal analysis test: The test is performed using a METTLER TOLEDO TGA/DSC3+ simultaneous thermal analyzer according to the required process. The obtained curve is called the DSC curve, comprising the heating DSC curve and the cooling DSC curve.

Test conditions for heating DSC curve: The base glass is ground and sieved through a 200-mesh sieve to obtain the sample to be tested. About 20 mg of the sample is weighed. Under a protective atmosphere of nitrogen, it is heated from room temperature to 900 °C at a heating rate of 10 °C/min to obtain the heating DSC curve of the sample. The differential thermal analysis instrument used in the present disclosure for testing the heating DSC curve is the METTLER TOLEDO TGA/DSC3+ simultaneous thermal analyzer. The standard substance used for testing is α-Al₂O₃ powder. The container for placing the sample is a platinum crucible. The ambient temperature for instrument placement is 24 °C, and the air humidity is 40%.

Test conditions for cooling DSC curve: The base glass is ground and sieved through a 200-mesh sieve to obtain the sample to be tested. About 20 mg of the sample is weighed. Under a nitrogen protective atmosphere, it is heated from room temperature to 1400 °C at a heating rate of 10 °C/min, held for 10 min, then cooled to 450 °C at a cooling rate of 10 °C/min to obtain the cooling DSC curve of the sample. The cooling DSC curve is processed using Origin 2022b software, and the sum of the integrated areas of endothermic peaks and exothermic peaks on the curve can be obtained by Gaussian fitting. The differential thermal analysis instrument used in the present disclosure for testing the cooling DSC curve is the METTLER TOLEDO TGA/DSC3+ simultaneous thermal analyzer. The standard substance used for testing is α-Al₂O₃ powder. The container for placing the sample is a platinum crucible. The ambient temperature for instrument placement is 24 °C, and the air humidity is 40%.

Glass thickness: Tested by a laser thickness gauge.

Glass sheet size dimension measurement: The test is performed using a two-dimensional measuring machine (instrument model: Miyu MY-YXCL-4030). The glass sheet to be tested is placed on the measuring stage of the two-dimensional measuring machine, the program is set, and the instrument automatically captures and measures the length and width of the glass sheet.

XRD test: The glass-ceramic is crushed and ground into a sample with a particle size of less than 75 µm. An X-ray diffractometer is used to test the ground sample to obtain XRD diffraction peak curves and XRD diffraction data. The X-ray diffractometer is a Shimadzu XRD-6100, with 2θ = 10° to 80°, a scanning speed of 3 °/min, an operating voltage of 40 kV, and an operating current of 30 mA.

Determination of crystalline phases: The XRD test results (in RAW format) are imported into the X-ray diffraction data Rietveld refinement software JADE Standard 8.6 for fitting and analysis to determine the crystalline phases in the glass-ceramic sample.

The crystal content in the present disclosure refers to the percentage of the crystal or crystalline phase mass relative to the mass of the glass-ceramic, which is a weight percentage.

Determination of crystal content: The XRD test results (in RAW format) are imported into the X-ray diffraction data Rietveld refinement software JADE Standard 8.6 for fitting and calculation to obtain the crystal content in the glass-ceramic sample. Specifically, the ratio of the fitted crystalline phase peak area to the fitted total peak area is the crystal content.

Average crystal size test: Using the result data obtained from XRD test, according to the Scherrer formula D = Kλ / (β cosθ), the average crystal size of the sample can be calculated. Where λ is the X-ray wavelength, λ = 0.154056 nm, β is the full width at half maximum of the diffraction peak, K = 0.89, θ is the Bragg diffraction angle. Specifically, the RAW file (diffraction pattern) output by the XRD instrument is subjected to curve fitting in JADE Standard 8.6 software. Jade outputs a fitting report. Based on the 2θ angle value and Peak FWHM value corresponding to each diffraction peak in the fitting report, and converting the Peak FWHM value to radians: β = (FWHM / 180 × 3.14), the crystal size for each diffraction peak is calculated using the Scherrer formula D = Kλ / (β cosθ) and then averaged to obtain the average crystal size.

Surface Na₂O concentration test: Surface Na₂O concentration is equal to the mass of Na₂O divided by the total mass of oxides. The total mass of surface oxide comprises oxides SiO₂, Al₂O₃, P₂O₅, ZrO₂, Na₂O, K₂O, CaO, and other oxides that can be accurately tested by XRF, and does not comprise Li₂O, B₂O₃, and the like that cannot be accurately tested by XRF. The surface Na₂O concentration of the chemically strengthened glass-ceramic in the present disclosure is measured by an X-ray fluorescence spectrometer (XRF). The surface Na element content in the chemically strengthened glass-ceramic is measured by XRF, and then the surface Na₂O concentration is calculated. The calculation method is: surface Na₂O concentration = (surface Na element content × relative molecular weight of Na₂O) / (relative atomic mass of Na × 2). It should be understood that surface Na element content = Na element mass / total element mass, and total element mass = total oxide mass. The equipment used for testing is Thermo Scientific ARL^{™} PERFORM'X. The target material is Rh (rhodium), tube voltage is 40 kV, current is 60 mA, collimator is 0.15, crystal selects LiF200, detector selects FPC, test range is 29 mm circle, and analysis software is UniQuant standardless analysis. The XRF test is performed using a standardless test, and the mass of elements with atomic numbers 6 or less or oxides thereof in the glass is not tested. That is, in the present disclosure, when calculating the Na₂O concentration obtained by XRF test, the total mass of oxides does not comprise the mass of elements with atomic numbers 6 or less or oxides thereof in the glass.

### Fixed-point height drop test:

(1) A 120-mesh sandpaper is attached to the lower surface of a 187 g model phone, and the model phone is placed on a Wonder Inno drop tester;
(2) A glass-ceramic sample sheet to be tested with a dimension of 50 mm × 50 mm × 0.6 mm is placed on the smooth marble plate directly below the model phone, with the glass-ceramic sample sheet facing the sandpaper;
(3) The model phone is dropped from a fixed point height of 1.0 m to impact the glass-ceramic sample sheet directly below it. If the glass-ceramic sample sheet does not break, the sandpaper on the lower surface of the model phone is replaced, and the above drop impact process is repeated until the glass-ceramic breaks, and the number of drops at breakage is recorded.

At least 10 identical glass-ceramic sample sheets from each batch are subjected to the fixed-point height drop test, and the average of the test results from 10 glass-ceramic sheets is calculated to characterize the drop resistance of the glass-ceramic.

As mentioned above, in some embodiments of the present disclosure, a transparent glass-ceramic and a base glass for preparing the transparent glass-ceramic are provided. The base glass can be used to prepare the transparent glass-ceramic after heat treatment. Therefore, it can be understood that, based on molar percentage of oxides, the composition of the base glass is the same as the composition of the transparent glass-ceramic.

In some embodiments of the present disclosure, the transparent glass-ceramic comprises petalite (LiAlSi₄O₁₀) crystalline phase and lithium disilicate (Li₂Si₂O₅) crystalline phase as the main crystalline phase. Here, "main crystalline phase" means that in the transparent glass-ceramic of the present disclosure, the crystalline phase content accounts for the majority, that is, the petalite crystalline phase and the lithium disilicate crystalline phase have a higher weight percentage than other crystalline phases present in the transparent glass-ceramic.

In some embodiments of the present disclosure, based on molar percentage of oxides, the composition of the transparent glass-ceramic or base glass comprises: SiO₂: 60.90 mol% to 72.65 mol%, Al₂O₃: 1.50 mol% to 5.00 mol%, P₂O₅: 0.85 mol% to 1.50 mol%, ZrO₂: 2.00 mol% to 4.00 mol%, Na₂O: 0.00 mol% to 1.00 mol%, K₂O: 0.00 mol% to 0.50 mol%, Li₂O: 20.00 mol% to 30.00 mol%, CaO: 0.00 mol% to 1.60 mol%, and B₂O₃: 0.00 mol% to 1.00 mol%;
based on the content expressed as molar percentage of each oxide in the composition of the transparent glass-ceramic or base glass, the composition of the transparent glass-ceramic or base glass satisfies: $18.200 \leq {Li}_{2} O / {P}_{2} {O}_{5} \leq 25.500 ;$ and $14.000 \leq 2 \times {Li}_{2} O / \left(0.5\times {ZrO}_{2}+CaO\right) \leq 23.000 .$ The content of oxides and the relationship between the specific content of oxides under the specific conditions satisfied by the technical solution of the present disclosure can not only ensure the formation of petalite and lithium disilicate as the main crystalline phase, but also avoid issues such as overall bluish, hazy, or even cracking of the glass-ceramic brick during the preparation of glass-ceramic brick from large-size base glass brick while ensuring good melting conditions of the base glass brick. This is beneficial for the transparent glass-ceramic to obtain excellent optical performance and strength, so that the overall display effect of the transparent glass-ceramic can meet the application requirements of display screen cover plates. Meanwhile, after the transparent glass-ceramic of the present disclosure is subjected to chemical strengthening treatment, a chemically strengthened glass-ceramic with high strength can be obtained.

In the present disclosure, SiO₂ is an oxide that forms the glass network skeleton, used to stabilize the network structure of the base glass and glass-ceramic, and is an important component constituting crystalline phases such as lithium disilicate, petalite, β-spodumene, and quartz. When the SiO₂ content is too low, the glass tends to have a higher thermal expansion coefficient, reducing thermal shock resistance. When the SiO₂ content is too high, it can lead to poor fusibility of the glass, or an increase in the viscosity of the molten glass, making it difficult to clarify the glass, increasing the difficulty of glass forming, reducing productivity, and also leading to longer crystallization heat treatment times for the base glass. In the present disclosure, the transparent glass-ceramic or base glass comprises 60.90 mol% to 72.65 mol% SiO₂.

In some embodiments, the transparent glass-ceramic or base glass may comprise 60.90 mol% to 72.65 mol%, 60.90 mol% to 72.00 mol%, 60.90 mol% to 71.00 mol%, 60.90 mol% to 70.00 mol%, 60.90 mol% to 69.00 mol%, 60.90 mol% to 68.00 mol%, 62.00 mol% to 72.00 mol%, 63.00 mol% to 72.00 mol%, 64.00 mol% to 72.00 mol%, 65.00 mol% to 72.00 mol%, 66.00 mol% to 72.00 mol%, 67.00 mol% to 72.00 mol%, or 67.50 mol% to 71.00 mol% SiO₂. In some embodiments, the transparent glass-ceramic or base glass may comprise 60.90 mol%, 62.00 mol%, 63.00 mol%, 64.00 mol%, 65.00 mol%, 66.00 mol%, 67.00 mol%, 67.50 mol%, 68.00 mol%, 69.00 mol%, 70.00 mol%, 71.00 mol%, 72.00 mol%, or 72.65 mol% SiO₂, or may comprise SiO₂ within the numerical range formed by any two of the above specific values as endpoints. It should be understood that, in a particular embodiment, any of the above ranges can be combined with any other range, as long as the transparent glass-ceramic or base glass with the performance required by the present disclosure can be obtained.

In the present disclosure, Al₂O₃ can be used to construct the glass skeleton and is an indispensable component for forming petalite. Al₂O₃ coordinates around crystal nuclei, forming a "core-shell" structure. This structure makes it difficult for crystal nucleus components to be supplied from outside the shell, the crystal nuclei do not easily grow, and multiple tiny crystal grains are easily formed. When the Al₂O₃ content is too low, the glass tends to have a higher thermal expansion coefficient, its chemical durability decreases, and crystal nuclei tend to become larger, making the glass-ceramic prone to whitening. When the Al₂O₃ content is too high, the fusibility of the glass becomes poor, production becomes difficult, and mullite crystals are easily precipitated, causing the glass to devitrify. In the present disclosure, the transparent glass-ceramic or base glass comprises 1.50 mol% to 5.00 mol% Al₂O₃. Satisfying this content range of Al₂O₃ is beneficial for stabilizing the glass network structure, improving the mechanical properties and chemical durability of the transparent glass-ceramic, inhibiting glass phase separation, reducing the thermal expansion coefficient, and increasing the strain point.

In some embodiments, the transparent glass-ceramic or base glass may comprise 1.50 mol% to 5.00 mol%, 3.50 mol% to 5.00 mol%, 3.50 mol% to 4.00 mol%, 3.50 mol% to 4.50 mol%, 4.00 mol% to 5.00 mol%, or 4.50 mol% to 5.00 mol% Al₂O₃. In some embodiments, the transparent glass-ceramic or base glass may comprise 1.50 mol%, 2.00 mol%, 2.50 mol%, 3.00 mol%, 3.50 mol%, 4.00 mol%, 4.50 mol%, or 5.00 mol% Al₂O₃, or may comprise Al₂O₃ within the numerical range formed by any two of the above specific values as endpoints. It should be understood that, in specific embodiments, any of the above ranges can be combined with any other range, as long as the transparent glass-ceramic or base glass with the performance required by the present disclosure can be obtained.

In the present disclosure, Li₂O is the main component of the petalite crystalline phase and lithium disilicate crystalline phases, and is also a necessary component for chemical strengthening. When the Li₂O content is too low, it can easily lead to reduced glass fusibility or increased viscosity, making the glass difficult to clarify, making base glass forming difficult, and causing the glass to easily precipitate impurity phases, such as mullite, etc., causing the glass to devitrify. When the Li₂O content is too high, the crystallization ability of the glass becomes too strong, the glass tends to devitrify, and the glass-ceramic becomes easily damaged. In the present disclosure, the transparent glass-ceramic or base glass comprises 20.00 mol% to 30.00 mol% Li₂O. Satisfying this content range of Li₂O is beneficial for ensuring that the transparency, fusibility, crystallization ability, and other properties of the glass-ceramic meet requirements.

In some embodiments, the transparent glass-ceramic or base glass may comprise 20.00 mol% to 30.00 mol%, 20.00 mol% to 25.00 mol%, 20.00 mol% to 24.00 mol%, 20.00 mol% to 23.00 mol%, 20.00 mol% to 22.00 mol%, 20.00 mol% to 21.00 mol%, or 21.00 mol% to 23.00 mol% Li₂O. In some embodiments, the transparent glass-ceramic or base glass may comprise 20.00 mol%, 21.00 mol%, 22.00 mol%, 23.00 mol%, 24.00 mol%, 25.00 mol%, 26.00 mol%, 27.00 mol%, 28.00 mol%, or 30.00 mol% Li₂O, or may comprise Li₂O within the numerical range formed by any two of the above specific values as endpoints. It should be understood that, in specific embodiments, any of the above ranges can be combined with any other range, as long as the transparent glass-ceramic or base glass with the performance required by the present disclosure can be obtained.

In the present disclosure, P₂O₅ is a glass-forming oxide, existing in the network structure as phosphorus-oxygen tetrahedra [PO₄]. P₂O₅ appears preferentially during heat treatment, first causing glass phase separation and aggregation, forming amorphous precursor phase Li₃PO₄, and then Li₃PO₄ acts as heterogeneous nucleation sites, and lithium metasilicate and other crystalline phases grow attached to the amorphous Li₃PO₄. As the P₂O₅ content increases, the number of heterogeneous nucleation sites increases, and the crystal grains nucleated by Li₃PO₄ are effectively refined, which is beneficial for improving the overall transmittance, uniformity of the glass, and reducing the b-value of the glass-ceramic. However, when the P₂O₅ content is too high, the crystallization onset temperature increases, and more Li₃PO₄ crystals are easily generated, resulting in insufficient Li₂O content for forming lithium disilicate and petalite, which in turn leads to easy precipitation of quartz crystals in the base glass, causing a decrease in the transmittance of the glass-ceramic and a decrease in the overall optical uniformity of the glass-ceramic, or even causing direct crystallization of the base glass during melting and forming. When the P₂O₅ content is too low, it can easily precipitate coarse ZrO₂ crystals, causing the glass to devitrify. In the present disclosure, the transparent glass-ceramic or base glass comprises 0.85 mol% to 1.50 mol% P₂O₅. This content range of P₂O₅ is beneficial for ensuring high transmittance, good optical uniformity of the glass-ceramic, significantly reducing the b-value, and achieving the best gain effect.

In some embodiments, the transparent glass-ceramic or base glass may comprise 0.85 mol% to 1.50 mol%, 0.85 mol% to 1.40 mol%, 0.85 mol% to 1.30 mol%, 0.85 mol% to 1.20 mol%, 0.85 mol% to 1.10 mol%, 0.85 mol% to 1.00 mol%, or 1.00 mol% to 1.30 mol% P₂O₅. In some embodiments, the transparent glass-ceramic or base glass may comprise 0.85 mol%, 0.95 mol%, 1.00 mol%, 1.10 mol%, 1.20 mol%, 1.30 mol%, 1.40 mol%, or 1.50 mol% P₂O₅, or may comprise P₂O₅ within the numerical range formed by any two of the above specific values as endpoints. It should be understood that, in specific embodiments, any of the above ranges can be combined with any other range, as long as the transparent glass-ceramic or base glass with the performance required by the present disclosure can be obtained.

In the present disclosure, since P₂O₅ preferentially forms amorphous Li₃PO₄ during heat treatment, and an increase in P₂O₅ will inevitably compete for more Li₂O, this is done so as to reduce the generation of lithium disilicate and petalite, it is necessary to supplement a certain amount of Li₂O. In this regard, in the present disclosure, based on the content expressed as molar percentage of each oxide in the composition of the transparent glass-ceramic or base glass, the composition of the transparent glass-ceramic or base glass satisfies: 18.200 ≤ Li₂O / P₂O₅ ≤ 25.500, where the chemical formulas in the expression represent the molar percentage of oxides. This is beneficial for ensuring the formation of the main crystalline phase and improving the strength performance of the glass. In some embodiments, the value of Li₂O / P₂O₅ can be, for example, 18.200, 18.300, 18.400, 18.500, 18.600, 18.700, 18.800, 18.900, 19.000, 19.100, 19.200, 19.300, 19.400, 19.500, 19.600, 19.700, 19.800, 19.900, 20.000, 20.100, 20.200, 20.300, 20.400, 20.500, 20.600, 20.700, 20.800, 20.900, 21.000, 21.100, 21.200, 21.300, 21.400, 21.500, 21.600, 21.700, 21.800, 21.900, 22.000, 22.100, 22.200, 22.300, 22.400, 22.500, 22.600, 22.700, 22.800, 22.900, 23.000, 23.100, 23.200, 23.300, 23.400, 23.500, 23.600, 23.700, 23.800, 23.900, 24.000, 24.100, 24.200, 24.300, 24.400, 24.500, 24.600, 24.700, 24.800, 24.900, 25.000, 25.100, 25.200, 25.300, 25.400, or 25.500, or can be a value within the numerical range formed by any two of the above specific values as endpoints. It should be understood that, in specific embodiments, any of the above ranges can be combined with any other range, as long as the transparent glass-ceramic or base glass with the performance required by the present disclosure can be obtained.

In the present disclosure, an appropriate amount of ZrO₂ exists in the residual glass phase after heat treatment, which is beneficial for improving the mechanical properties of the glass-ceramic. However, excessive ZrO₂ increases the difficulty of base glass melting and can easily lead to the formation of white zirconium precipitation in the base glass, which is not conducive to the production of transparent glass-ceramics. In the present disclosure, the transparent glass-ceramic or base glass comprises 2.00 mol% to 4.00 mol% ZrO₂. Satisfying this content range of ZrO₂ is beneficial for producing transparent glass-ceramics and improving the mechanical properties of transparent glass-ceramics.

In some embodiments, the transparent glass-ceramic or base glass may comprise 2.00 mol% to 4.00 mol%, 2.50 mol% to 3.50 mol%, 2.50 mol% to 3.30 mol%, 2.50 mol% to 3.10 mol%, 2.50 mol% to 3.00 mol%, 2.50 mol% to 2.80 mol%, 2.80 mol% to 3.50 mol%, 2.80 mol% to 3.40 mol%, 2.80 mol% to 3.30 mol%, or 2.80 mol% to 3.10 mol% ZrO₂. In some embodiments, the transparent glass-ceramic or base glass may comprise 2.00 mol%, 2.50 mol%, 2.70 mol%, 2.90 mol%, 3.00 mol%, 3.10 mol%, 3.30 mol%, 3.50 mol%, or 4.00 mol% ZrO₂, or may comprise ZrO₂ within the numerical range formed by any two of the above specific values as endpoints. It should be understood that, in specific embodiments, any of the above ranges can be combined with any other range, as long as the transparent glass-ceramic or base glass with the performance required by the present disclosure can be obtained.

In the present disclosure, an appropriate amount of B₂O₃ helps reduce the melting temperature of the base glass. B₂O₃ exists as structural units of boron-oxygen triangles [BO₃] and boron-oxygen tetrahedra [BO₄]. As the B₂O₃ content increases, changes in the relative content of boron-oxygen triangles and boron-oxygen tetrahedra lead to structural and property inversion phenomena. When too much B₂O₃ is added, on the one hand, the three-dimensional framework structure of boron-oxygen tetrahedra [BO₄] transforms into the two-dimensional layered structure of boron-oxygen triangles [BO₃], and the three-coordinate boron-oxygen triangle [BO₃] is not as strong as the boron-oxygen tetrahedron [BO₄], resulting in an effect of opening the network structure. At the same time, an increase in B₂O₃ content in the residual glass phase reduces the viscosity of the residual glass phase, promoting the growth of crystals such as lithium metasilicate; on the other hand, the base glass more easily precipitates SiO₂ crystalline phases (e.g., cristobalite), affecting glass transmittance while also worsening the overall uniformity of the glass brick. In the present disclosure, the transparent glass-ceramic or base glass comprises 0.00 mol% to 1.00 mol% B₂O₃. Satisfying this content range of B₂O₃ helps reduce the melting temperature of the base glass and improve properties such as transmittance and overall uniformity of the glass-ceramic.

In some embodiments, the transparent glass-ceramic or base glass may comprise 0.00 mol% to 1.00 mol%, 0.00 mol% to 0.90 mol%, 0.00 mol% to 0.80 mol%, 0.00 mol% to 0.70 mol%, 0.00 mol% to 0.60 mol%, 0.00 mol% to 0.50 mol%, 0.00 mol% to 0.40 mol%, 0.20 mol% to 1.00 mol%, 0.30 mol% to 0.80 mol%, or 0.30 mol% to 0.50 mol% B₂O₃. In some embodiments, the transparent glass-ceramic or base glass may comprise 0.00 mol%, 0.10 mol%, 0.20 mol%, 0.30 mol%, 0.40 mol%, 0.50 mol%, 0.70 mol%, 0.90 mol%, or 1.00 mol% B₂O₃, or may comprise B₂O₃ within the numerical range formed by any two of the above specific values as endpoints. It should be understood that, in specific embodiments, any of the above ranges can be combined with any other range, as long as the transparent glass-ceramic or base glass with the performance required by the present disclosure can be obtained.

In the present disclosure, Na₂O and K₂O are network modifier oxides that can provide free oxygen, so that the oxygen-to-silicon ratio in the glass structure is increased. Therefore, excessive Na₂O and K₂O can affect the network structure of the glass, affecting the optical performance, thermal stability, chemical stability, mechanical strength, and weather resistance of the glass. However, in the present disclosure, appropriate amounts of Na₂O and K₂O can bring certain beneficial effects. For example, an appropriate amount of Na₂O can play roles such as regulating crystal grain size, promoting the crystallization of lithium disilicate structures, and reducing the crystallization tendency of the base glass, thereby appropriately increasing the transmittance of the glass-ceramic, and appropriately improve the thermal stability, chemical stability, mechanical strength, weather resistance, etc. of the glass-ceramic. Therefore, in the present disclosure, preferably, the transparent glass-ceramic or base glass comprises 0.00 mol% to 1.00 mol% Na₂O and 0.00 mol% to 0.50 mol% K₂O.

In some embodiments, the transparent glass-ceramic or base glass may comprise 0.00 mol% to 1.00 mol%, 0.00 mol% to 0.90 mol%, 0.00 mol% to 0.80 mol%, 0.00 mol% to 0.70 mol%, 0.00 mol% to 0.60 mol%, 0.00 mol% to 0.50 mol%, 0.00 mol% to 0.40 mol%, 0.20 mol% to 1.00 mol%, 0.30 mol% to 0.80 mol%, or 0.30 mol% to 0.50 mol% Na₂O. In some embodiments, the transparent glass-ceramic or base glass may comprise 0.00 mol%, 0.10 mol%, 0.20 mol%, 0.30 mol%, 0.40 mol%, 0.50 mol%, 0.70 mol%, 0.90 mol%, or 1.00 mol% Na₂O, or may comprise Na₂O within the numerical range formed by any two of the above specific values as endpoints. It should be understood that, in specific embodiments, any of the above ranges can be combined with any other range, as long as the transparent glass-ceramic or base glass with the performance required by the present disclosure can be obtained.

In some embodiments, the transparent glass-ceramic or base glass may comprise 0.00 mol% to 0.50 mol%, 0.00 mol% to 0.40 mol%, 0.00 mol% to 0.30 mol%, 0.00 mol% to 0.20 mol%, 0.00 mol% to 0.10 mol%, 0.10 mol% to 0.50 mol%, or 0.20 mol% to 0.40 mol% K₂O. In some embodiments, the transparent glass-ceramic or base glass may comprise 0.00 mol%, 0.10 mol%, 0.20 mol%, 0.30 mol%, 0.40 mol%, or 0.50 mol% K₂O, or may comprise K₂O within the numerical range formed by any two of the above specific values as endpoints. It should be understood that, in specific embodiments, any of the above ranges can be combined with any other range, as long as the transparent glass-ceramic or base glass with the performance required by the present disclosure can be obtained.

In the present disclosure, an appropriate amount of CaO is beneficial for increasing the chemical stability and mechanical strength of the glass, reducing the viscosity of the glass, enhancing the fusibility and formability of the glass, and also beneficial for adjusting the thermal expansion coefficient and refractive index of the glass-ceramic. However, when the CaO content is too high, the glass tends to devitrify after crystallization treatment, and excessive CaO remaining in the glass phase creates a refractive index difference with the main crystalline phase, which can lead to a decrease in the transmittance and an increase in the haze of the glass-ceramic. In the present disclosure, the transparent glass-ceramic or base glass comprises 0.00 mol% to 1.60 mol% CaO.

In some embodiments, the transparent glass-ceramic or base glass may comprise 0.00 mol% to 1.60 mol%, 0.50 mol% to 1.60 mol%, 0.50 mol% to 1.50 mol%, 0.50 mol% to 1.30 mol%, 0.50 mol% to 1.20 mol%, 0.50 mol% to 1.00 mol%, 0.50 mol% to 0.85 mol%, 0.85 mol% to 1.40 mol%, 0.85 mol% to 1.30 mol%, 0.85 mol% to 1.20 mol%, 0.85 mol% to 1.10 mol%, 0.85 mol% to 1.00 mol%, or 1.00 mol% to 1.30 mol% CaO. In some embodiments, the transparent glass-ceramic or base glass may comprise 0.00 mol%, 0.50 mol%, 0.70 mol%, 0.85 mol%, 0.95 mol%, 1.00 mol%, 1.10 mol%, 1.20 mol%, 1.30 mol%, 1.40 mol%, 1.50 mol%, or 1.60 mol% CaO, or may comprise CaO within the numerical range formed by any two of the above specific values as endpoints. It should be understood that, in specific embodiments, any of the above ranges can be combined with any other range, as long as the transparent glass-ceramic or base glass with the performance required by the present disclosure can be obtained.

In the present disclosure, based on the content expressed as molar percentage of each oxide in the composition of the transparent glass-ceramic or base glass, the composition of the transparent glass-ceramic or base glass satisfies: 14.000 ≤ 2 × Li₂O / (0.5 × ZrO₂ + CaO) ≤ 23.000, where the chemical formulas in the expression represent the molar percentage of oxides. This is beneficial for the batch production of large-sized transparent glass-ceramics that meet optical performance requirements. In some embodiments, the value of 2 × Li₂O / (0.5 × ZrO₂ + CaO) can be, for example, 14.000, 15.000, 16.000, 17.000, 18.000, 19.000, 20.000, 21.000, 22.000, or 23.000, or can be a value within the numerical range formed by any two of the above specific values as endpoints. It should be understood that, in specific embodiments, any of the above ranges can be combined with any other range, as long as the transparent glass-ceramic or base glass with the performance required by the present disclosure can be obtained.

In some embodiments, based on the content expressed as molar percentage of each oxide in the composition of the transparent glass-ceramic or base glass, the composition of the transparent glass-ceramic or base glass satisfies: 4.100 ≤ (Li₂O + Na₂O + K₂O + B₂O₃) / (P₂O₅ + ZrO₂ + CaO) ≤ 6.000, where the chemical formulas in the expression represent the molar percentage of oxides, thereby facilitating the formation of a transparent glass-ceramic with a specific structure and excellent performance, especially optical and strength performance. In some embodiments, the value of (Li₂O + Na₂O + K₂O + B₂O₃) / (P₂O₅ + ZrO₂ + CaO) can be, for example, 4.100, 4.200, 4.300, 4.400, 4.500, 4.600, 4.700, 4.800, 4.900, 5.000, 5.100, 5.200, 5.300, 5.400, 5.500, 5.600, 5.700, 5.800, 5.900, or 6.000, as well as any value between these adjacent point values, or can be a value within the numerical range formed by any two of the above specific values as endpoints. It should be understood that, in specific embodiments, any of the above ranges can be combined with any other range, as long as the transparent glass-ceramic or base glass with the performance required by the present disclosure can be obtained.

In some embodiments, based on the content expressed as molar percentage of each oxide in the composition of the transparent glass-ceramic or base glass, the composition of the transparent glass-ceramic or base glass satisfies: 0.100 ≤ P₂O₅ × (CaO + ZrO₂ + Li₂O + Al₂O₃) / (Na₂O + K₂O + B₂O₃) ≤ 0.900, preferably 0.190 ≤ P₂O₅ × (CaO + ZrO₂ + Li₂O + Al₂O₃) / (Na₂O + K₂O + B₂O₃) ≤ 0.900, where the chemical formulas in the expression represent the molar percentage of oxides, thereby facilitating the formation of a transparent glass-ceramic with a specific structure and excellent performance, especially optical and strength performance. In some embodiments, the value of P₂O₅ × (CaO + ZrO₂ + Li₂O + Al₂O₃) / (Na₂O + K₂O + B₂O₃) can be, for example, 0.100, 0.200, 0.300, 0.400, 0.500, 0.600, 0.700, 0.800, or 0.900, or can be a value within the numerical range formed by any two of the above specific values as endpoints. It should be understood that, in specific embodiments, any of the above ranges can be combined with any other range, as long as the transparent glass-ceramic or base glass with the performance required by the present disclosure can be obtained.

In some embodiments, based on molar percentage of oxides, the composition of the transparent glass-ceramic or base glass comprises: SiO₂: 67.50 mol% to 71.00 mol%, Al₂O₃: 3.50 mol% to 5.00 mol%, P₂O₅: 0.85 mol% to 1.50 mol%, ZrO₂: 2.50 mol% to 3.50 mol%, Na₂O: 0.00 mol% to 1.00 mol%, K₂O: greater than 0.00 mol% and not greater than 0.50 mol%, Li₂O: 20.00 mol% to 25.00 mol%, CaO: greater than 0.50 mol% and not greater than 1.60 mol%, and B₂O₃: 0.00 mol% to 1.00 mol%. By adjusting the content relationships of the necessary oxides, it is beneficial to further optimize the network structure of the transparent glass-ceramic, thereby helping to ensure the mass production effect of large-size transparent glass-ceramics and the excellent optical and strength performances of the mass-produced products.

In some embodiments, the transparent glass-ceramic does not contain a quartz crystalline phase. In a glass-ceramic with petalite crystalline phase and lithium disilicate crystalline phase as the main crystalline phase, if a quartz crystalline phase precipitates, it will lead to a decrease in the transmittance of the glass-ceramic, affecting its optical performance, and also easily worsen the overall uniformity of the glass-ceramic brick, leading to issues such as large differences in b-values among different areas of the glass and uneven coloration appearance. In some embodiments, the crystallinity of the transparent glass-ceramic is ≥ 70.00 wt%, preferably, the crystallinity is ≥ 80.00 wt%. Here, the "crystallinity of the transparent glass-ceramic" refers to the percentage of the mass of all crystalline phases or crystals in the glass-ceramic relative to the mass of the glass-ceramic. A higher content of microcrystalline phase is beneficial for improving the mechanical strength performance of the glass-ceramic. In some embodiments, the crystallinity of the transparent glass-ceramic can be 70.00 wt%, 75.00 wt%, 80.00 wt%, 85.00 wt%, 90.00 wt%, 93.00 wt%, 95.00 wt%, 98.00 wt%, or 100.00 wt%, or can be a value within the numerical range formed by any two of the above specific values as endpoints. It should be understood that, in specific embodiments, any of the above ranges can be combined with any other range, as long as the transparent glass-ceramic with the performance required by the present disclosure can be obtained.

In some embodiments, in the transparent glass-ceramic, the average crystal size is less than or equal to 100 nm. A smaller average crystal size is beneficial to ensure the excellent optical performance of the transparent glass-ceramic. In some embodiments, the average crystal size can be 10 nm, 20 nm, 30 nm, 40 nm, 50 nm, 60 nm, 70 nm, 80 nm, 90 nm, or 100 nm, or can be a value within the numerical range formed by any two of the above specific values as endpoints. It should be understood that, in specific embodiments, any of the above ranges can be combined with any other range, as long as the transparent glass-ceramic with the performance required by the present disclosure can be obtained.

In some embodiments, in the transparent glass-ceramic, the petalite crystalline phase accounts for 35.00 wt% to 50.00 wt% of the mass of the transparent glass-ceramic, and the lithium disilicate crystalline phase accounts for 35.00 wt% to 50.00 wt% of the mass of the transparent glass-ceramic. In some embodiments, the percentage of the petalite crystalline phase relative to the mass of the transparent glass-ceramic can be 35.00 wt% to 50.00 wt%, 35.00 wt% to 45.00 wt%, 35.00 wt% to 40.00 wt%, or 40.00 wt% to 50.00 wt%. In some embodiments, the transparent glass-ceramic may comprise 35.00 wt%, 40.00 wt%, 45.00 wt%, or 50.00 wt% of the petalite crystalline phase, or may comprise the petalite crystalline phase within the numerical range formed by any two of the above specific values as endpoints. It should be understood that, in specific embodiments, any of the above ranges can be combined with any other range, as long as the transparent glass-ceramic with the performance required by the present disclosure can be obtained.

In some embodiments, the percentage of the lithium disilicate crystalline phase relative to the mass of the transparent glass-ceramic can be 35.00 wt% to 50.00 wt%, 35.00 wt% to 45.00 wt%, 35.00 wt% to 40.00 wt%, or 40.00 wt% to 50.00 wt%. In some embodiments, the transparent glass-ceramic may comprise 35.00 wt%, 40.00 wt%, 45.00 wt%, or 50.00 wt% of the lithium disilicate crystalline phase, or may comprise the lithium disilicate crystalline phase within the numerical range formed by any two of the above specific values as endpoints. It should be understood that, in specific embodiments, any of the above ranges can be combined with any other range, as long as the transparent glass-ceramic with the performance required by the present disclosure can be obtained.

By adjusting the petalite crystalline phase and the lithium disilicate crystalline phase to satisfy an appropriate proportional relationship, it is beneficial to form a specific microstructure, thereby helping to ensure that the transparent glass-ceramic has high mechanical strength and fracture toughness.

In some embodiments, the transparent glass-ceramic comprises one or more selected from the group consisting of a lithium metasilicate (Li₂SiO₃) crystalline phase, a lithium phosphate (Li₃PO₄) crystalline phase, and a spodumene crystalline phase as a secondary crystalline phase. In some embodiments, in the transparent glass-ceramic, the secondary crystalline phase accounts for 30.00 wt% or less of the mass of the transparent glass-ceramic, preferably the secondary crystalline phase accounts for 10.00 wt% or less of the mass of the transparent glass-ceramic. In the transparent glass-ceramic of the present disclosure, the low content of secondary crystalline phase is more beneficial to ensure the high content of the main crystalline phase, thereby ensuring the excellent mechanical strength performance of the transparent glass-ceramic. In some embodiments, the percentage of secondary crystalline phases relative to the mass of the transparent glass-ceramic can be 0 wt%, 5 wt%, 10 wt%, 15 wt%, 20 wt%, 25 wt%, or 30.00 wt%, or can be a value within the numerical range formed by any two of the above specific values as endpoints. It should be understood that, in specific embodiments, any of the above ranges can be combined with any other range, as long as the transparent glass-ceramic with the performance required by the present disclosure can be obtained.

In some embodiments, in the transparent glass-ceramic, the lithium metasilicate crystalline phase accounts for 5.00 wt% or less of the mass of the transparent glass-ceramic, and the total amount of lithium phosphate crystalline phase and spodumene crystalline phase accounts for 5.00 wt% or less of the mass of the transparent glass-ceramic.

In some embodiments, when the transparent glass-ceramic has a dimension of (200 mm to 500 mm) × (100 mm to 500 mm) × (10 mm to 40 mm) in length, width, and thickness, the difference between the maximum b-value and the minimum b-value at nine locations on the main surface of the transparent glass-ceramic is ≤ 2.00, preferably ≤ 1.50, and more preferably ≤ 1.00. Here, "the difference between the maximum b-value and the minimum b-value" refers to the difference between the maximum value and minimum value of b tested at nine locations on the main surface of the glass. In some embodiments, the difference between the maximum b-value and the minimum b-value at nine locations on the main surface of the transparent glass-ceramic under this dimension can be 0, 0.10, 0.50, 0.80, 1.00, 1.20, 1.50, 1.70, 1.80, 1.90, or 2.00, or can be a value within the numerical range formed by any two of the above specific values as endpoints. It should be understood that, in specific embodiments, any of the above ranges can be combined with any other range, as long as the transparent glass-ceramic with the performance required by the present disclosure can be obtained. The smaller the difference between the maximum and minimum b-values at nine locations on the main surface of the glass-ceramic satisfying this dimension, the better the overall uniformity and optical effect of the glass-ceramic of the present disclosure when produced into this dimension, which is beneficial for ensuring that the glass-ceramic sheets cut from it meet excellent optical performance requirements and display effect requirements.

In some embodiments, when the transparent glass-ceramic has a dimension of (45 mm to 450 mm) × (45 mm to 350 mm) × (0.4 mm to 2.0 mm) in length, width, and thickness, the difference between the maximum b-value and the minimum b-value at nine locations on the main surface of this transparent glass-ceramic is ≤ 0.30, preferably ≤ 0.10, preferably ≤ 0.06. In some embodiments, the difference between the maximum b-value and the minimum b-value at nine locations on the main surface of the transparent glass-ceramic under this dimension can be 0, 0.01, 0.02, 0.03, 0.04, 0.05, 0.06, 0.07, 0.08, 0.09, 0.10, 0.20, or 0.30, or may be a value within the numerical range formed by any two of the above specific values as endpoints. It should be understood that, in specific embodiments, any of the above ranges can be combined with any other range, as long as the transparent glass-ceramic with the performance required by the present disclosure can be obtained. The smaller the difference between the maximum b-value and the minimum b-value at nine locations on the main surface of the glass-ceramic sheet of this dimension, the better the overall uniformity and overall display effect of the glass-ceramic sheet of the present disclosure.

Wherein, the nine locations are respectively: (1) four locations corresponding to test circles I tangent to the long sides and the adjacent short sides of the main surface; (2) four locations corresponding to test circles II each centered at points on line segments connecting centers of the four test locations of test circles I, the points being closest to midpoints of long sides or short sides of the main surface; (3) one location corresponding to test circle III centered at a center point of the main surface, as shown in FIG. 13. Combined with the aforementioned b-value test method, it can be seen that each tested location is a circle with a test aperture, and the center of this circle coincides with the above test circle I, test circle II, or test circle III.

In some embodiments, when a thickness of the transparent glass-ceramic is 0.6 mm, the b-value is ≤ 1.00, preferably the b-value is ≤ 0.70, the haze is ≤ 0.25%, preferably the haze is ≤ 0.18%, and the transmittance of the transparent glass-ceramic at a wavelength of 550 nm is ≥ 90.00%. In some preferred embodiments, when the thickness of the transparent glass-ceramic is 0.6 mm, the b-value is ≤ 0.60, the haze is ≤ 0.16%, and the transmittance of the transparent glass-ceramic at a wavelength of 550 nm is ≥ 90.50%. The higher the transmittance and the smaller the b-value and haze, indicating that the optical performance of the transparent glass-ceramic is better.

In some embodiments, the transmittance of the transparent glass-ceramic with a thickness of 0.6 mm at a wavelength of 550 nm can be 90.00%, 90.50%, 91.00%, 92.00%, 93.00%, 94.00%, 95.00%, 96.00%, 97.00%, 98.00%, 99.00%, or 100.00%, or can be a value within the numerical range formed by any two of the above specific values as endpoints. It should be understood that, in specific embodiments, any of the above ranges can be combined with any other range, as long as the transparent glass-ceramic with the performance required by the present disclosure can be obtained. In some embodiments, the b-value of the transparent glass-ceramic with a thickness of 0.6 mm can be 0, 0.1, 0.2, 0.3, 0.4, 0.5, 0.6, 0.7, 0.8, 0.9, or 1.0, or can be a value within the numerical range formed by any two of the above specific values as endpoints. It should be understood that, in specific embodiments, any of the above ranges can be combined with any other range, as long as the transparent glass-ceramic with the performance required by the present disclosure can be obtained. In some embodiments, the haze of the transparent glass-ceramic with a thickness of 0.6 mm can be 0, 0.01%, 0.05%, 0.08%, 0.10%, 0.12%, 0.14%, 0.16%, 0.18%, 0.20%, or 0.25%, or can be a value within the numerical range formed by any two of the above specific values as endpoints. It should be understood that, in specific embodiments, any of the above ranges can be combined with any other range, as long as the transparent glass-ceramic with the performance required by the present disclosure can be obtained.

As mentioned above, the difference between the maximum b-value and the minimum b-value at nine locations on the main surface of the transparent glass-ceramic of the present disclosure is small, meaning the b-values in different areas of this transparent glass-ceramic are close. The transmittance of the transparent glass-ceramic of the present disclosure is high, the b-value is low, and the haze is low, all of these indicating that the optical performance of the transparent glass-ceramic of the present disclosure is superior and uniform, meeting the application requirements for display screen cover plates.

In some embodiments, according to simultaneous thermal analysis test, under a nitrogen protective atmosphere, the base glass is heated from room temperature to 900 °C at a heating rate of 10 °C/min to obtain a heating DSC curve. In this heating DSC curve, there are at least two exothermic peaks, wherein the first exothermic peak temperature T₁ is 600 °C to 730 °C, the second exothermic peak temperature T₂ is 740 °C to 800 °C, and T₁ and T₂ satisfy the following relationship: 100°C ≥ T₂ - T₁ ≥ 40°C, preferably 80°C ≥ T₂ - T₁ ≥ 50°C.

In some embodiments, according to simultaneous thermal analysis test, under a nitrogen protective atmosphere, the base glass is heated from room temperature to 1400 °C at a heating rate of 10 °C/min, held for 10 min, then cooled from 1400 °C to 450 °C at a cooling rate of 10 °C/min to obtain a cooling DSC curve. In this cooling DSC curve, within the range of 500 °C to 900 °C, the sum S of the integrated areas of its comprised exothermic peaks and endothermic peaks is ≤ 10, preferably there are no endothermic peaks and/or no exothermic peaks, and more preferably S = 0.

The large-sized base glass bricks employing a base glass formulation satisfying specific DSC curve characteristics (including specific heating DSC curve characteristics and specific cooling DSC curve characteristics), when subjected to heat treatment under the process conditions of mass production line for glass-ceramics, can produce transparent glass-ceramic bricks with optical performance and display effects meeting the application requirements for display screens. This can well solve the issues in the prior art during mass production of the glass-ceramic bricks, such as cracking of the glass brick, significant differences in b-values between different areas of the glass brick, locally presenting undesired colors, uneven coloration, and poor display performance. Therefore, before preparing large-sized glass-ceramic bricks, small glass samples can be prepared according to the glass formulation. Based on the obtained DSC curve characteristics, it can be verified in advance whether the glass formulation is suitable for producing large-sized glass-ceramic products, especially qualified large-thickness glass-ceramic products. If not, adjustments can be made in a timely manner until the specific DSC curve characteristics are satisfied, and then the preparation of large-sized products can be carried out. This can greatly save time and costs and effectively avoid the waste of resources.

In some embodiments, the base glass is heated from room temperature to the temperature T₁₋₃₀ at a heating rate of 10 °C/min, and is held for 240 min for treatment. In the product obtained after this treatment, the content of the quartz crystalline phase is less than 15 wt%; wherein, T₁₋₃₀ = T₁ - 30 °C.

In some embodiments, the base glass is heated from room temperature to the temperature T₁₋₆₀ at a heating rate of 10 °C/min, and is held for 240 min for treatment. In the product obtained after this treatment, the content of the quartz crystalline phase is less than 5 wt%, preferably no quartz crystalline phase; wherein, T₁₋₆₀ = T₁ - 60 °C.

The base glass meeting the content requirement of the specific quartz crystalline phase after heat treatment at the temperature of T₁₋₃₀ and/or T₁₋₆₀ can effectively avoid the precipitation of a quartz crystalline phase that affects the optical performance of the glass-ceramic in the target glass-ceramic brick when the target glass-ceramic is prepared by heat treatment, thereby ensuring that the large-size transparent glass-ceramic brick meeting the use requirements can be produced in mass production.

The preparation methods or forming methods for the base glass of the present disclosure include but are not limited to the float method, overflow method, rolling method, casting method, or continuous melting method. To improve production yield, the present disclosure preferably uses the continuous melting method to prepare the base glass. The continuous melting method refers to a melting method where raw materials are continuously fed and continuously discharged from the furnace. Specifically, the raw materials can be continuously fed into the melting furnace through an automatic feeding device, heated to 1500 °C to 1600 °C, melted for 24 hours to 72 hours, then drawn and formed, continuously drawn and cut into base glass products of any length.

The method for preparing the transparent glass-ceramic of the present disclosure comprises: performing heat treatment on the base glass as described above to prepare the transparent glass-ceramic. The conditions for the heat treatment of the present disclosure have a wide optional range, and those skilled in the art can select from the prior art according to actual needs.

In some embodiments, the heat treatment comprises nucleation treatment and crystallization treatment, wherein, the temperature for nucleation treatment is (Tg - 20 °C) to (Tg + 40 °C), for example, it can be (Tg - 20 °C), (Tg - 15 °C), (Tg - 10 °C), (Tg - 5 °C), (Tg - 2 °C), Tg, (Tg + 2 °C), (Tg + 5 °C), (Tg + 10 °C), (Tg + 15 °C), or (Tg + 40 °C), or any value between these adjacent point values. Wherein, Tg is the glass transition temperature of the base glass.

In some embodiments, the time of nucleation treatment is 0 min to 6000 min, for example, it can be 0 min, 30 min, 50 min, 70 min, 100 min, 130 min, 150 min, 180 min, 200 min, 250 min, 280 min, 300 min, 330 min, 360 min, 600 min, 800 min, 900 min, 1500 min, 2000 min, or 6000 min, or any value between these adjacent point values.

In some embodiments, the temperature for crystallization treatment is (T₁ - 20 °C) to (T₁ + 20 °C), for example, it can be (T₁ - 20 °C), (T₁ - 15 °C), (T₁ - 10 °C), (T₁ - 5 °C), (T₁ - 2 °C), T₁, (T₁ + 2 °C), (T₁ + 5 °C), (T₁ + 10 °C), (T₁ + 15 °C), or (T₁ + 20 °C), or any value between these adjacent point values.

In some embodiments, the time of crystallization treatment is 30 min to 6000 min, for example, it can be 30 min, 50 min, 70 min, 100 min, 130 min, 150 min, 180 min, 200 min, 250 min, 280 min, 300 min, 330 min, 360 min, 400 min, 450 min, 500 min, 550 min, 600 min, 1000 min, 2000 min, 3000 min, 4000 min, 5000 min, or 6000 min, or any value between these adjacent point values.

In some embodiments, the heating rate during the heat treatment process is 5 °C/min to 15 °C/min, for example, it can be 5 °C/min, 8 °C/min, 10 °C/min, 12 °C/min, 14 °C/min, or 15 °C/min, or any value between these adjacent point values.

It should be understood that, in the present disclosure, the nucleation treatment involves heating to the specified nucleation treatment temperature (also called nucleation temperature), and holding at this temperature for a given period after reaching the nucleation treatment temperature. The holding time here is the nucleation treatment time (also called nucleation time). The crystallization treatment involves heating to the specified crystallization treatment temperature (also called crystallization temperature), and holding at this temperature for a given period after reaching the crystallization treatment temperature. The holding time here is the crystallization treatment time (also called crystallization time). Using the above heat treatment conditions is beneficial for preparing transparent glass-ceramic products with a specific microstructure, uniform structure, with petalite crystalline phase and lithium disilicate crystalline phase as the main crystalline phase, and excellent optical and mechanical performance.

In some embodiments, the process for preparing the transparent glass-ceramic of the present disclosure also comprises the step of performing cold working treatment on the transparent glass-ceramic (brick) obtained by heat treatment of the base glass to obtain transparent glass-ceramic of the required dimension size (e.g., thickness of 0.2 mm to 2.0 mm). The cold working treatment here comprises shaping treatment, slicing treatment, CNC treatment, grinding treatment, polishing treatment, etc., commonly used in the field. Those skilled in the art can select one or more selected from the group consisting of the above methods for cold working of the transparent glass-ceramic according to actual needs.

The present disclosure provides a chemically strengthened glass-ceramic, wherein the chemically strengthened glass-ceramic is prepared by subjecting the transparent glass-ceramic as described above to chemical strengthening treatment. The composition at a center of the chemically strengthened glass-ceramic is basically the same as the composition of the transparent glass-ceramic. The chemically strengthened glass-ceramic comprises a compressive stress layer region extending from the surface of the transparent glass-ceramic to the depth of compression, and has tensile stress inside the chemically strengthened glass-ceramic.

After chemical strengthening treatment, it should be understood that the composition at the surface of the glass-ceramic may differ from that of the newly formed glass-ceramic (i.e., the glass-ceramic not subjected to chemical strengthening treatment). This is because ion exchange occurs during chemical strengthening treatment. One type of alkali metal ion in the newly formed glass-ceramic (e.g., Li⁺ or Na⁺) is replaced by a larger alkali metal ion (e.g., Na⁺ or K⁺), such as Na⁺ in the glass-ceramic exchanging with K⁺ in the molten salt bath, being replaced by K⁺, and/or Li⁺ in the glass-ceramic exchanging with Na⁺ in the molten salt bath, being replaced by Na⁺. However, in embodiments, the composition and phase assemblage at the center of the depth of the glass product or near the center of the depth will still have the composition and phase assemblage of the newly formed glass-ceramic. That is, in the chemically strengthened glass-ceramic of the present disclosure, the composition of the compressive stress layer formed on the surface through ion exchange may differ from that of the unstrengthened glass-ceramic, while the composition of the tensile stress layer inside having tensile stress (also called tensile stress) or the composition at the center of the glass-ceramic will still have the composition of the unstrengthened glass-ceramic.

The conditions for the chemical strengthening treatment in the present disclosure have a wide optional range, and those skilled in the art can select according to actual needs. In some embodiments, the salt bath for the chemical strengthening treatment is a mixed molten salt, and the composition of this mixed molten salt comprises: 0 < NaNO₃ < 100 wt%, 0 < KNO₃ < 100 wt%, and 0 < LiNO₃ ≤ 0.2 wt%.

In various embodiments, based on the total amount of NaNO₃ and KNO₃ in the mixed molten salt, the mixed molten salt comprises 0 < NaNO₃ < 100 wt%. For example, the mixed molten salt may comprise 20 wt% to 50 wt%, 10 wt% to 50 wt%, 10 wt% to 40 wt%, 20 wt% to 40 wt%, 20 wt% to 90 wt%, or 40 wt% to 90 wt% NaNO₃. In various embodiments, based on the total amount of NaNO₃ and KNO₃ in the mixed molten salt, the mixed molten salt comprises 0 < KNO₃ < 100 wt%. For example, the mixed molten salt may comprise 20 wt% to 50 wt%, 10 wt% to 50 wt%, 10 wt% to 40 wt%, 20 wt% to 40 wt%, 20 wt% to 90 wt%, or 40 wt% to 90 wt% KNO₃. In various embodiments, based on the total amount of NaNO₃ and KNO₃ in the mixed molten salt, the mixed molten salt further comprises 0 < LiNO₃ ≤ 0.2 wt%. For example, the mixed molten salt may comprise 0.01 wt% to 0.20 wt%, 0.01 wt% to 0.18 wt%, 0.01 wt% to 0.15 wt%, 0.01 wt% to 0.10 wt%, or 0.01 wt% to 0.05 wt% LiNO₃.

In some embodiments, the temperature of the salt bath for the chemical strengthening treatment is 430 °C to 530 °C, and the time of the chemical strengthening treatment is 0.5 h to 15.0 h.

By employing the above-mentioned strengthening process for chemical strengthening, it is beneficial to optimize the chemical strengthening efficiency and ensure that the chemically strengthened glass-ceramic obtains a desired stress level.

In some embodiments, the temperature of the salt bath for the chemical strengthening treatment can be 430 °C, 440 °C, 450 °C, 460 °C, 470 °C, 480 °C, 490 °C, 500 °C, 510 °C, 520 °C, or 530 °C, or can be a value within the numerical range formed by any two of the above specific values as endpoints.

In some embodiments, the time of the chemical strengthening treatment can be 0.5 h, 1.0 h, 2.0 h, 3.0 h, 4.0 h, 5.0 h, 6.0 h, 7.0 h, 8.0 h, 9.0 h, 10.0 h, 11.0 h, 12.0 h, 13.0 h, 14.0 h, or 15.0 h, or can be a value within the numerical range formed by any two of the above specific values as endpoints.

In some embodiments, the surface Na₂O concentration of the chemically strengthened glass-ceramic is 5.0 wt% to 20.0 wt%. For example, the surface Na₂O concentration of the chemically strengthened glass-ceramic can be 5.0 wt%, 6.0 wt%, 7.0 wt%, 8.0 wt%, 9.0 wt%, 10.0 wt%, 11.0 wt%, 12.0 wt%, 13.0 wt%, 14.0 wt%, 15.0 wt%, 16.0 wt%, 17.0 wt%, 18.0 wt%, 19.0 wt%, or 20.0 wt%, or can be a value within the numerical range formed by any two of the above specific values as endpoints. By enabling the surface Na₂O concentration meet the above range, it can not only ensure that the chemically strengthened glass-ceramic has a relatively excellent surface stress level, but also ensure that the chemically strengthened glass-ceramic has good weather resistance and chemical durability.

In some embodiments, the chemically strengthened glass-ceramic has a CS_50 of 110 MPa to 200 MPa, where CS_50 refers to the compressive stress value at a depth of 50 µm from the main surface of the chemically strengthened glass-ceramic. For example, the chemically strengthened glass-ceramic may have a CS_50 of 110 MPa to 200 MPa, 110 MPa to 180 MPa, 110 MPa to 160 MPa, 110 MPa to 150 MPa, 110 MPa to 130 MPa, 130 MPa to 180 MPa, or 130 MPa to 150 MPa. The CS_50 range of this chemically strengthened glass-ceramic being within the above range indicates that the compressive stress at a depth of 50 µm from the surface of the chemically strengthened glass-ceramic is high, meaning the chemically strengthened glass-ceramic has a high surface stress level. A higher surface compressive stress level can offset more residual energy from drop impacts, thereby ensuring its excellent damage resistance. In some embodiments, the chemically strengthened glass-ceramic has a |CT_AV| of 84 MPa to 140 MPa, where |CT_AV| refers to the absolute value of the average tensile stress. For example, the chemically strengthened glass-ceramic may have a |CT_AV| of 84 MPa to 140 MPa, 85 MPa to 140 MPa, 85 MPa to 120 MPa, 85 MPa to 100 MPa, 90 MPa to 140 MPa, 100 MPa to 140 MPa, or 120 MPa to 140 MPa. The |CT_AV| of this chemically strengthened glass-ceramic being within the above range indicates that the chemically strengthened glass-ceramic has a high tensile stress level, reflecting that it has a high surface stress level. A higher surface compressive stress level can offset more residual energy from drop impacts, thereby ensuring its excellent damage resistance.

In some embodiments, the compressive stress layer depth DOL_0 of the chemically strengthened glass-ceramic is 0.18t to 0.25t, where t is the thickness of the chemically strengthened glass-ceramic. For example, the compressive stress layer depth DOL_0 of the chemically strengthened glass-ceramic can be 0.18t to 0.25t, 0.18t to 0.22t, 0.18t to 0.20t, 0.20t to 0.25t, or 0.22t to 0.25t. Exemplarily, when the thickness of the chemically strengthened glass-ceramic is 0.6 mm, the DOL_0 of the chemically strengthened glass-ceramic can be 0.108 mm, 0.120 mm, 0.130 mm, 0.140 mm, 0.145 mm, or 0.150 mm. The DOL_0 of this chemically strengthened glass-ceramic being within the above range indicates that the chemically strengthened glass-ceramic has a high compressive stress layer depth, which is more conducive to offsetting the energy that drives crack propagation, thereby ensuring its excellent anti-damage performance.

Satisfying specific stress characteristics can ensure that the chemically strengthened glass-ceramic has excellent mechanical strength performance, mechanical performance, especially excellent drop resistance performance.

In some embodiments, using 120-mesh sandpaper, multiple fixed-height drop tests are performed on the chemically strengthened glass-ceramic with a thickness of 0.6 mm. The fixed height for testing is 1.0 m. The number of drops until breakage for this chemically strengthened glass-ceramic is ≥ 30, preferably ≥ 50. This indicates that the chemically strengthened glass-ceramic of the present disclosure has excellent drop resistance performance.

The transparent glass-ceramic or chemically strengthened glass-ceramic with excellent optical and mechanical performance provided by the present disclosure can be used in any glass device requiring glass-ceramics, and can be used in many applications. For example, work surfaces, other surfaces, covers for electronic equipment or electronic device, electrical appliance doors, floor tiles, wall panels, storage containers, etc. Other surfaces may include but are not limited to exterior wall surfaces, stair tread surfaces, column veneers, countertop surfaces, etc. Types of electronic equipment or electronic device may include but are not limited to handheld, desktop-mounted, and wall-mounted, etc. Covers may include but are not limited to mobile phone cover plates, mobile phone back plates, tablet computer cover plates, etc. Storage containers may include but are not limited to plates, beverage bottles, etc.

In some embodiments of the present disclosure, the transparent glass-ceramic or chemically strengthened glass-ceramic can be 2D, 2.5D, 3D, or irregularly shaped; and/or, the transparent glass-ceramic or chemically strengthened glass-ceramic can be of uniform thickness or non-uniform thickness. Those skilled in the art can choose according to requirements. "Non-uniform thickness" herein means that the transparent glass-ceramic or chemically strengthened glass-ceramic comprises at least two parts with different thicknesses.

The examples of the present disclosure are described in detail below. They are exemplary and are only used to explain the present disclosure and should not be construed as limiting the present disclosure.

In the example numbers in the following tables, S refers to Example, such as S1 refers to Example 1; and D refers to Comparative Example, such as D1 refers to Comparative Example 1.

### Example 1

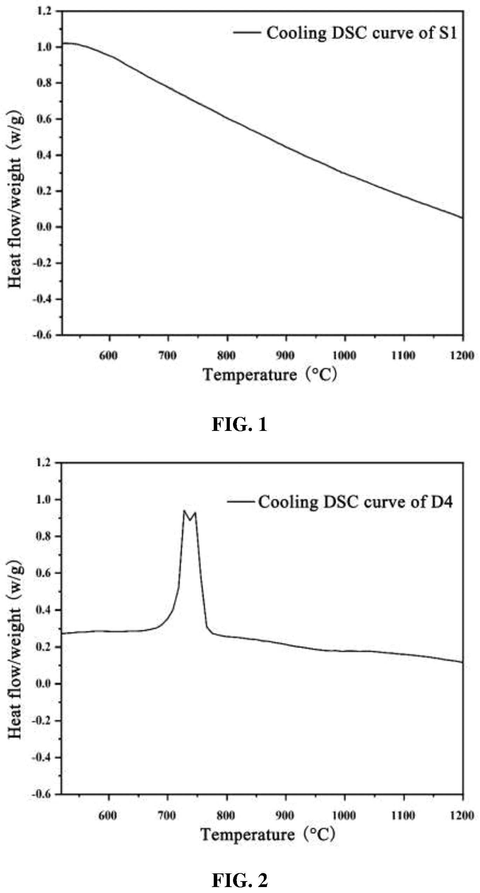

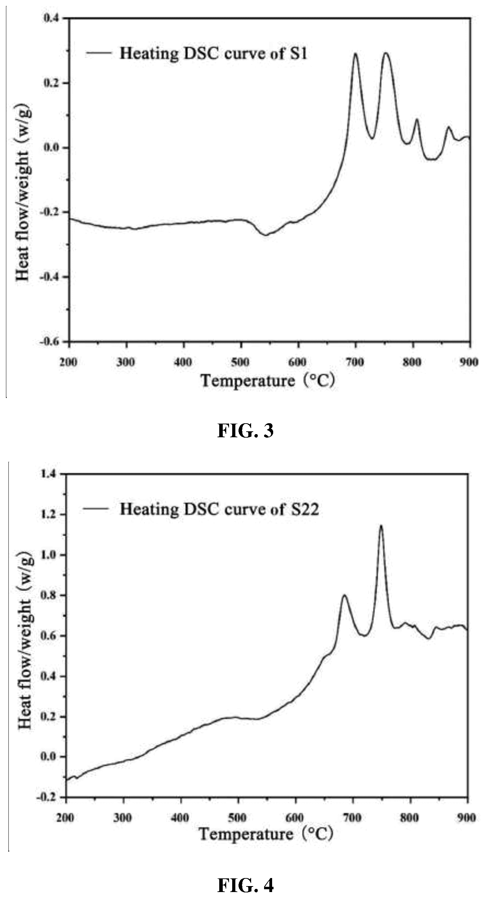

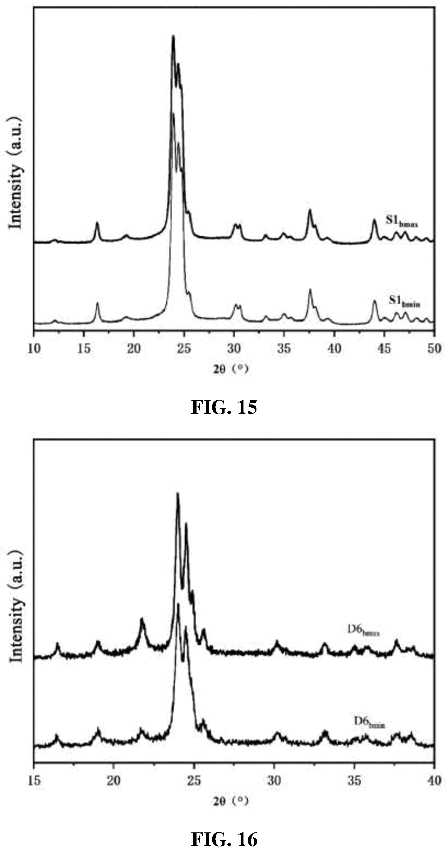

(1) Preparation of base glass: A base glass was produced using the continuous melting method. Raw materials were prepared according to the oxide proportions of S1 in Table 1, mixed uniformly, then continuously fed into the melting furnace through an automatic feeding device, heated to 1600 °C, melted for 24 h, then drawn and formed, continuously drawn and cut into the desired dimension to obtain the base glass (brick) product. For example, it could be cut into a base glass (brick) with a dimension of 360 mm (length) × 180 mm (width) × 30 mm (thickness).
   Testing of the base glass obtained in S1:
   I. By observation, the base glass prepared in S1 was clear and transparent overall.
   II. The Tg, heating DSC curve, and cooling DSC curve of the base glass in S1 were measured. The first exothermic peak temperature T₁, the second exothermic peak temperature T₂, and their difference data in the heating DSC curve were recorded. The sum S data of the integrated areas of exothermic peaks and endothermic peaks within the range of 500 °C to 900 °C in the cooling DSC curve were calculated, as shown in Table 3, FIG. 1, and FIG. 3, respectively. Table 2 shows the calculation results of the oxide content relationships in Table 1.
   III. The base glass prepared in S1 was heated from room temperature to the temperatures T₁₋₃₀ and T₁₋₆₀ at a heating rate of 10 °C/min, respectively, and held at T₁₋₃₀ and T₁₋₆₀ temperatures for 240 min for treatment. The content of quartz crystalline phase in the products obtained after treatment was tested, and the results are shown in Table 3.
(2) Preparation of glass-ceramic: A heat treatment roller kiln line was used. The base glass was subjected to heat treatment process to produce glass-ceramic bricks, wherein the heat treatment process is shown in Table 4, comprising sequentially performed nucleation treatment and crystallization treatment (recorded as heat treatment process B). The heating rate during the heat treatment process was 10 °C/min. After leaving the furnace, glass-ceramic bricks were obtained. Based on molar percentage of oxides, the composition of the prepared glass-ceramic was the same as that of the base glass, as detailed in Table 1.
   Testing of the glass-ceramic brick obtained in S1:
   I. By observation, the obtained glass-ceramic brick in S1 was overall clear and transparent.
   II. The composition of crystalline phase, the content of crystalline phase, and the crystallinity of the glass-ceramic were tested, and the results are shown in Table 4. And after calculation, the average crystal size in the glass-ceramic was 19 nm.
   III. The difference between the maximum b-value and the minimum b-value measured at nine locations on the main surface of the glass-ceramic with a dimension of 360 mm (length) × 180 mm (width) × 30 mm (thickness) was tested, and the results are shown in Table 4.
(3) Cold working treatment of the glass-ceramic brick: The above glass-ceramic brick was subjected to cold working treatment. The cold working treatment comprised sequentially performed shaping treatment, slicing treatment, CNC treatment, grinding treatment, and polishing treatment, obtaining a glass-ceramic sheet with a dimension of 170 mm (length) × 80 mm (width) × 0.6 mm (thickness).
   Testing of the glass-ceramic sheet obtained in S1:
   I. The optical performance of this glass-ceramic sheet was tested, comprising the difference between the maximum b-value and the minimum b-value at nine locations on the main surface of the glass-ceramic sample sheet, the average of b-values at nine locations, haze, and transmittance. The test results are shown in Table 4.
   II. The XRD diffraction curves at the location with the maximum b-value and the location with the minimum b-value among the b-value at nine locations tests for this glass-ceramic sheet were tested respectively, and the comparison is shown in FIG. 15. From FIG. 15, it can be seen that in this glass-ceramic sheet, there is substantially no difference, or the difference is very little, in the crystalline phase structure between the location with the maximum b-value and the location with the minimum b-value on the main surface. This indicates that the glass-ceramic sheet is relatively uniform overall, and the optical display effect should tend to be consistent.
(4) Preparation of chemically strengthened glass-ceramic: The glass-ceramic sheet with dimensions of 170 mm (length) × 80 mm (width) × 0.6 mm (thickness) obtained in step (3) was placed in a mixed nitrate salt bath of 70.00 wt% KNO₃ + 30.00 wt% NaNO₃ + 0.03 wt% LiNO₃ (here, based on the total amount of NaNO₃ and KNO₃ in the mixed molten salt, the mixed molten salt comprises 0.03 wt% LiNO₃) at 470 °C, treated for 7.0 h, to obtain a chemically strengthened glass-ceramic, t = 0.6 mm.

Testing of the chemically strengthened glass-ceramic obtained in S1:
The obtained chemically strengthened glass-ceramic was subjected to 1.0 m fixed-height drop resistance performance test using 120-mesh sandpaper; the surface Na₂O concentration, CS_50, |CT_AV|, and DOL_0 of the chemically strengthened glass-ceramic were tested. The test data are shown in Table 5, respectively.

### Example 2 to Example 28

These were performed with reference to Example 1, respectively, with the difference that the raw material compositions and their corresponding test results for each example are shown in Tables 1 to 5, respectively. The transparent glass-ceramics of Example 2 to Example 28 all satisfied: overall clear and transparent in appearance, no cracking phenomena; the main crystalline phase of the transparent glass-ceramic were Li₂Si₂O₅ and LiAlSi₄O₁₀, and no quartz crystalline phase was present. After calculation, the average crystal size of the glass-ceramics of Example 2 to Example 28 was between 10 nm and 50 nm.

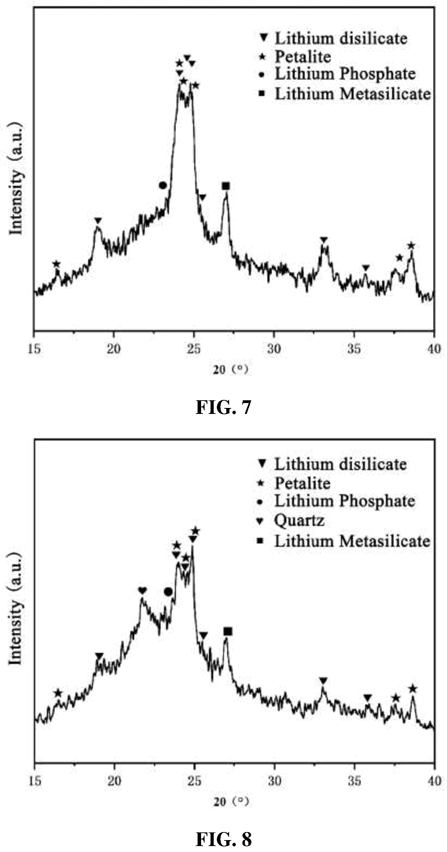

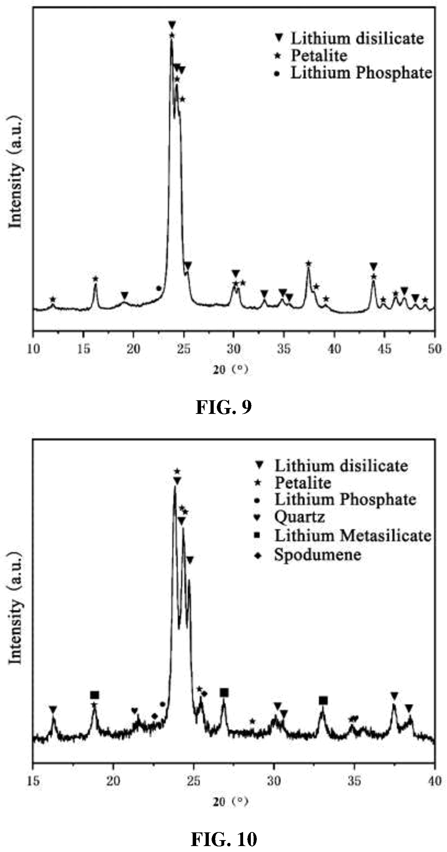

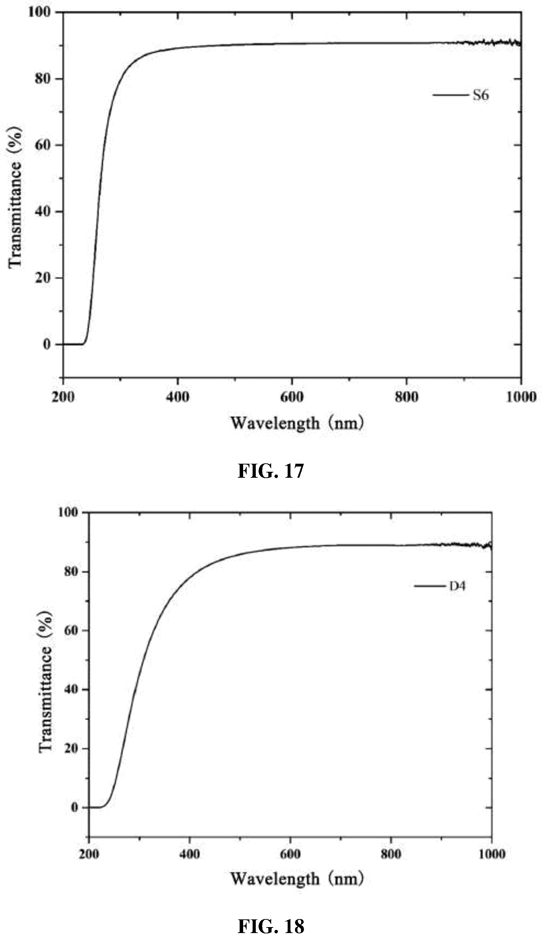

The XRD diffraction pattern of the product obtained after the base glass of Example 3 was treated by heat treatment process A (crystallization temperature T₁₋₆₀) is shown in FIG. 7. FIG. 7 shows that after the base glass of Example 3 was treated by heat treatment process A, the crystalline phases of the obtained product included petalite, lithium disilicate, lithium metasilicate, and lithium phosphate crystalline phases. The XRD diffraction pattern of the product obtained after the base glass of Example 3 was treated by heat treatment process B is shown in FIG. 9, and the crystalline phases are shown in Table 4. The transmittance curve of the glass-ceramic sheet obtained after the base glass of Example 6 was treated by heat treatment process B, at a thickness of 0.6 mm, is shown in FIG. 17. Among them, the heating DSC curve measured for the base glass of Example 22 is shown in FIG. 4.

### Comparative Example 1 to Comparative Example 13

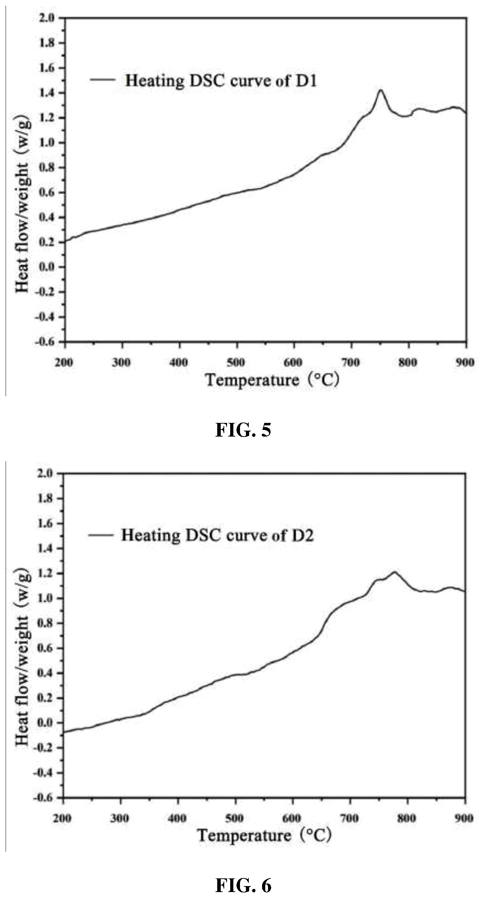

These were performed with reference to Example 1, respectively, with the difference that the raw material compositions and their corresponding test results for each comparative example are shown in Tables 6 to 11, respectively. Among them, the heating DSC curve of the base glass of Comparative Example 1 is shown in FIG. 5. The heating DSC curve of the base glass of Comparative Example 2 is shown in FIG. 6. The XRD diffraction pattern of the product obtained after the base glass of Comparative Example 2 was treated by heat treatment process A (crystallization temperature T₁₋₆₀) is shown in FIG. 8. The XRD diffraction pattern of the glass-ceramic obtained after the base glass of Comparative Example 2 was treated by heat treatment process B is shown in FIG. 10, and the crystalline phases are shown in Table 9. The cooling DSC curve of the base glass of Comparative Example 4 is shown in FIG. 2. The transmittance curve of the glass-ceramic sheet obtained after the base glass of Comparative Example 4 was treated by heat treatment process B, at a thickness of 0.6 mm, is shown in FIG. 18.

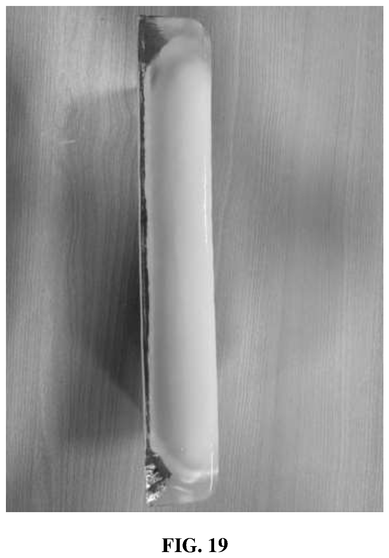

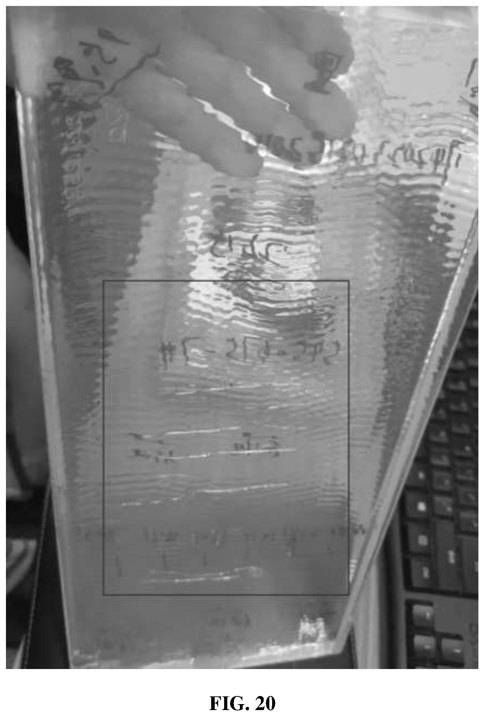

The comparison of XRD diffraction curves at the location with the maximum b-value and the location with the minimum b-value among the b-value at nine locations tests for the glass-ceramic sheet of Comparative Example 6 (which is uneven coloration) is shown in FIG. 16. The drawing shows that there are obvious differences in the crystalline phase structure between the location with the maximum b-value and the location with the minimum b-value on the main surface of this glass-ceramic sheet, indicating that the overall structure of this glass-ceramic sheet is quite different. This will lead to differences in the overall display effect, resulting in local coloration on the main surface and/or overall non-uniform coloration. The melting appearance of the base glass of Comparative Example 9 was milky white, as shown in FIG. 19. After the base glass brick of Comparative Example 7 was treated by heat treatment process B, the glass-ceramic brick cracked, as shown in FIG. 20, where obvious cracks can be seen in the square frame in FIG. 20. After calculation, the average crystal size of the glass-ceramics of Comparative Example 1 to Comparative Example 12 was greater than 20 nm.

**Table 1**

| Composition (mol%) | SiO₂ | Al₂O₃ | P₂O₅ | ZrO₂ | Na₂O | K₂O | Li₂O | CaO | B₂O₃ |
|---|---|---|---|---|---|---|---|---|---|
| S1 | 69.29 | 4.11 | 1.01 | 2.64 | 0.29 | 0.08 | 21.49 | 0.79 | 0.30 |
| S2 | 70.36 | 4.17 | 1.03 | 2.68 | 0.30 | 0.08 | 20.28 | 0.80 | 0.30 |
| S3 | 70.00 | 4.15 | 1.02 | 2.66 | 0.29 | 0.09 | 20.68 | 0.80 | 0.31 |
| S4 | 69.64 | 4.13 | 1.02 | 2.65 | 0.29 | 0.08 | 21.09 | 0.80 | 0.30 |
| S5 | 68.59 | 4.07 | 1.00 | 2.61 | 0.29 | 0.08 | 22.27 | 0.79 | 0.30 |
| S6 | 67.91 | 4.03 | 0.99 | 2.58 | 0.29 | 0.08 | 23.04 | 0.78 | 0.30 |
| S7 | 69.36 | 4.11 | 0.91 | 2.64 | 0.29 | 0.08 | 21.51 | 0.79 | 0.31 |
| S8 | 69.22 | 4.10 | 1.11 | 2.63 | 0.29 | 0.08 | 21.47 | 0.79 | 0.31 |
| S9 | 69.49 | 4.12 | 1.02 | 2.64 | 0.00 | 0.08 | 21.55 | 0.80 | 0.30 |
| S10 | 69.07 | 4.09 | 1.01 | 2.63 | 0.61 | 0.08 | 21.42 | 0.79 | 0.30 |
| S11 | 68.79 | 4.08 | 1.01 | 2.63 | 1.00 | 0.08 | 21.33 | 0.79 | 0.29 |
| S12 | 69.50 | 4.12 | 1.02 | 2.64 | 0.29 | 0.08 | 21.55 | 0.80 | 0.00 |
| S13 | 69.23 | 4.10 | 1.01 | 2.63 | 0.29 | 0.08 | 21.47 | 0.79 | 0.40 |
| S14 | 69.08 | 4.09 | 1.01 | 2.63 | 0.29 | 0.08 | 21.42 | 0.79 | 0.61 |
| S15 | 68.87 | 4.08 | 1.01 | 2.62 | 0.29 | 0.08 | 21.36 | 0.79 | 0.90 |
| S16 | 69.36 | 3.71 | 1.02 | 2.64 | 0.29 | 0.08 | 21.81 | 0.79 | 0.30 |
| S17 | 69.15 | 4.30 | 1.01 | 2.63 | 0.29 | 0.08 | 21.44 | 0.79 | 0.31 |
| S18 | 68.94 | 4.59 | 1.01 | 2.62 | 0.29 | 0.08 | 21.38 | 0.79 | 0.30 |
| S19 | 69.15 | 4.10 | 1.01 | 2.83 | 0.29 | 0.08 | 21.44 | 0.80 | 0.30 |
| S20 | 69.01 | 4.09 | 1.01 | 3.03 | 0.29 | 0.08 | 21.40 | 0.79 | 0.30 |
| S21 | 68.80 | 4.08 | 1.01 | 3.32 | 0.29 | 0.08 | 21.34 | 0.79 | 0.29 |
| S22 | 69.01 | 4.09 | 0.91 | 2.62 | 0.29 | 0.08 | 21.91 | 0.79 | 0.30 |
| S23 | 68.25 | 4.05 | 1.20 | 2.60 | 0.29 | 0.08 | 22.46 | 0.78 | 0.29 |
| S24 | 69.29 | 4.01 | 0.91 | 2.84 | 0.29 | 0.08 | 21.49 | 0.79 | 0.30 |
| S25 | 69.08 | 3.99 | 0.91 | 2.83 | 0.59 | 0.08 | 21.42 | 0.79 | 0.31 |
| S26 | 69.18 | 4.00 | 0.86 | 2.83 | 0.49 | 0.08 | 21.45 | 0.79 | 0.32 |
| S27 | 69.17 | 4.10 | 1.01 | 2.63 | 0.29 | 0.08 | 21.47 | 0.95 | 0.30 |
| S28 | 68.79 | 4.08 | 1.01 | 2.62 | 0.29 | 0.08 | 21.33 | 1.51 | 0.29 |

**Table 2**

| Composition proportion | (Li₂O + Na₂O + K₂O + B₂O₃) / (P₂O₅ + ZrO₂ + CaO) | Li₂O / P₂O₅ | P₂O₅ × (CaO + ZrO₂ + Li₂O + Al₂O₃) / (Na₂O + K₂O + B₂O₃) | 2 × Li₂O / (0.5 ×ZrO₂ + CaO) |
|---|---|---|---|---|
| S1 | 4.991 | 21.277 | 0.438 | 20.370 |
| S2 | 4.647 | 19.689 | 0.423 | 18.953 |
| S3 | 4.770 | 20.275 | 0.418 | 19.418 |
| S4 | 4.868 | 20.676 | 0.436 | 19.849 |
| S5 | 5.214 | 22.270 | 0.444 | 21.260 |
| S6 | 5.451 | 23.273 | 0.450 | 22.261 |
| S7 | 5.113 | 23.637 | 0.389 | 20.389 |
| S8 | 4.890 | 19.342 | 0.473 | 20.399 |
| S9 | 4.917 | 21.127 | 0.781 | 20.330 |
| S10 | 5.059 | 21.208 | 0.295 | 20.352 |
| S11 | 5.124 | 21.119 | 0.213 | 20.266 |
| S12 | 4.915 | 21.127 | 0.802 | 20.330 |
| S13 | 5.020 | 21.257 | 0.380 | 20.399 |
| S14 | 5.056 | 21.208 | 0.298 | 20.352 |
| S15 | 5.120 | 21.149 | 0.229 | 20.343 |
| S16 | 5.052 | 21.382 | 0.441 | 20.673 |
| S17 | 4.993 | 21.228 | 0.433 | 20.371 |
| S18 | 4.989 | 21.168 | 0.443 | 20.362 |
| S19 | 4.765 | 21.228 | 0.440 | 19.359 |
| S20 | 4.569 | 21.188 | 0.442 | 18.568 |
| S21 | 4.297 | 21.129 | 0.452 | 17.420 |
| S22 | 5.227 | 24.077 | 0.399 | 20.867 |
| S23 | 5.048 | 18.717 | 0.543 | 21.596 |
| S24 | 4.881 | 23.615 | 0.396 | 19.448 |
| S25 | 4.945 | 23.538 | 0.270 | 19.429 |
| S26 | 4.987 | 24.942 | 0.281 | 19.456 |
| S27 | 4.824 | 21.257 | 0.439 | 18.958 |
| S28 | 4.278 | 21.119 | 0.452 | 15.128 |

**Table 3**

| Example Nos. | Appearance of the base glass brick | Tg/ C | T₁/ °C | T₂/ °C | T₂-T₁/ °C | The sum S of integrated areas of the exothermic peak and the endothermic peak | The content of quartz crystalline phase after heat treatment at T₁₋₆₀ | The content of quartz crystalline phase after heat treatment at T₁₋₃₀ |
|---|---|---|---|---|---|---|---|---|
| S1 | Overall clear and transparent | 543.0 | 698.5 | 752.5 | 54.0 | 0.000 | 0.00% | 0.00% |
| S2 | Overall clear and transparent | 536.0 | 724.0 | 777.5 | 53.5 | 0.000 | 0.00% | 0.00% |
| S3 | Overall clear and transparent | 545.0 | 711.5 | 754.0 | 42.5 | 1.320 | 0.00% | 6.80% |
| S4 | Overall clear and transparent | 541.0 | 708.5 | 751.2 | 42.7 | 1.468 | 0.00% | 10.20% |
| S5 | Overall clear and transparent | 535.0 | 684.8 | 748.5 | 63.7 | 0.000 | 0.00% | 0.00% |
| S6 | Overall clear and transparent | 523.0 | 678.0 | 744.8 | 66.8 | 4.623 | 0.00% | 0.00% |
| S7 | Overall clear and transparent | 524.0 | 693.3 | 746.0 | 52.7 | 0.000 | 0.00% | 0.00% |
| S8 | Overall clear and transparent | 543.0 | 707.0 | 747.0 | 40.0 | 8.030 | 0.00% | 9.40% |
| S9 | Overall clear and transparent | 541.0 | 704.8 | 749.2 | 44.4 | 0.534 | 0.00% | 3.10% |
| S10 | Overall clear and transparent | 546.0 | 692.5 | 755.0 | 62.5 | 0.000 | 0.00% | 0.00% |
| S11 | Overall clear and transparent | 534.0 | 683.5 | 760.8 | 77.3 | 0.000 | 0.00% | 0.00% |
| S12 | Overall clear and transparent | 536.0 | 699.7 | 758.8 | 59.1 | 0.000 | 0.00% | 0.00% |
| S13 | Overall clear and transparent | 531.0 | 697.6 | 744.6 | 47.0 | 1.280 | 0.00% | 2.40% |
| S14 | Overall clear and transparent | 532.0 | 697.7 | 748.0 | 50.3 | 0.000 | 0.00% | 0.00% |
| S15 | Overall clear and transparent | 546.0 | 695.5 | 740.3 | 44.8 | 1.031 | 0.00% | 2.00% |
| S16 | Overall clear and transparent | 542.0 | 689.3 | 752.5 | 63.2 | 0.000 | 0.00% | 0.00% |
| S17 | Overall clear and transparent | 542.0 | 706.3 | 754.3 | 48.0 | 0.000 | 0.00% | 0.00% |
| S18 | Overall clear and transparent | 539.0 | 710.2 | 758.2 | 48.0 | 0.000 | 0.00% | 0.00% |
| S19 | Overall clear and transparent | 545.0 | 706.0 | 756.3 | 50.3 | 0.000 | 0.00% | 0.00% |
| S20 | Overall clear and transparent | 537.0 | 712.2 | 759.3 | 47.1 | 0.000 | 0.00% | 0.00% |
| S21 | Overall clear and transparent | 526.0 | 721.0 | 769.0 | 48.0 | 0.000 | 0.00% | 0.00% |
| S22 | Overall clear and transparent | 543.0 | 691.5 | 748.0 | 56.5 | 0.000 | 0.00% | 0.00% |
| S23 | Overall clear and transparent | 544.0 | 708.6 | 761.0 | 52.4 | 2.047 | 0.00% | 0.00% |
| S24 | Overall clear and transparent | 544.0 | 703.0 | 749.3 | 46.3 | 0.000 | 0.00% | 0.00% |
| S25 | Overall clear and transparent | 547.0 | 694.0 | 756.0 | 62.0 | 0.000 | 0.00% | 0.00% |
| S26 | Overall clear and transparent | 537.0 | 703.0 | 744.2 | 41.2 | 8.053 | 0.00% | 8.50% |
| S27 | Overall clear and transparent | 539.0 | 694.0 | 744.7 | 50.7 | 0.000 | 0.00% | 0.00% |
| S28 | Overall clear and transparent | 540.0 | 702.0 | 750.1 | 48.1 | 0.000 | 0.00% | 0.00% |

**Table 4**

| Exa mpl e Nos. | Nuclea tion temper ature/ holdin g time | Crysta llizatio n temper ature/ holdin g time | Appearance of the glass-ceram ic brick | Crystalline phase compositio n in glass-cera mic | Crystal linity | The differe nce betwee n the maxim um b-value and the minim um b-value at nine locatio ns; the glass-c eramic with a thickne ss of 30 mm | The differe nce betwee n the maxim um b-value and the minim um b-value at nine locatio ns; the glass-c eramic with a thickne ss of 0.6 mm | The averag e of b-value s at nine locatio ns; the glass-c eramic with a thickne ss of 0.6 mm | Haze; the glass-c eramic with a thickne ss of 0.6 mm | Transm ittance; the glass-c eramic with a thickne ss of 0.6 mm (at a wavele ngth of 550 nm) | The content of the petalite crystall ine phase in the glass-c eramic | The content of the crystall ine phase of lithium disilica te in the glass-c eramic |
|---|---|---|---|---|---|---|---|---|---|---|---|---|
| S1 | 560 °C/ 240 min | *700* °C/ 90 min | Overall clear and transparent | Li₃PO₄ | 89.50 % | 0.49 | 0.02 | 0.47 | 0.09% | 90.87 % | 43.50 % | 39.10 % |
| | | | | Li₂Si₂O₅ | | | | | | | | |
| | | | | LiAlSi₄O₁₀ | | | | | | | | |
| S2 | 577 °C/ 200 min | 730 °C/ 90 min | Overall clear and transparent | Li₃PO₄ | 90.50 % | 0.30 | 0.01 | 0.54 | 0.11% | 90.91 % | 43.20 % | 39.50 % |
| | | | | Li₂Si₂O₅ | | | | | | | | |
| | | | | LiAlSi₄O₁₀ | | | | | | | | |
| S3 | 570 °C/ 240 min | 725 °C/ 120 min | Overall clear and transparent | Li₃PO₄ | 87.60 % | 0.37 | 0.01 | 0.44 | 0.16% | 90.90 % | 40.60 % | 39.40 % |
| | | | | Li₂Si₂O₅ | | | | | | | | |
| | | | | LiAlSi₄O₁₀ | | | | | | | | |
| S4 | 540 °C/ 240 min | 720 °C/ 30 min | Overall clear and transparent | Li₃PO₄ | 89.70 % | 0.20 | 0.03 | 0.52 | 0.14% | 91.14 % | 41.70 % | 38.50 % |
| | | | | Li₂Si₂O₅ | | | | | | | | |
| | | | | LiAlSi₄O₁₀ | | | | | | | | |
| S5 | 540 °C/ 300 min | 680 °C/ 90 min | Overall clear and transparent | Li₃PO₄ | 91.60 % | 0.10 | 0.01 | 0.59 | 0.08% | 91.23 % | 40.50 % | 41.30 % |
| | | | | Li₂Si₂O₅ | | | | | | | | |
| | | | | LiAlSi₄O₁₀ | | | | | | | | |
| S6 | 520 °C/ 180 min | 680 °C/ 180 min | Overall clear and transparent | Li₃PO₄ | 88.50 % | 0.43 | 0.01 | 0.41 | 0.09% | 91.00 % | 39.90 % | 40.90 % |
| | | | | Li₂Si₂O₅ | | | | | | | | |
| | | | | LiAlSi₄O₁₀ | | | | | | | | |
| S7 | 530 °C/ 240 min | 680 °C/ 180 min | Overall clear and transparent | Li₃PO₄ | 90.60 % | 0.10 | 0.00 | 0.51 | 0.11% | 90.87 % | 40.80 % | 41.60 % |
| | | | | Li₂Si₂O₅ | | | | | | | | |
| | | | | LiAlSi₄O₁₀ | | | | | | | | |
| S8 | 590 °C/ 120 min | *705* °C/ 90 min | Overall clear and transparent | Li₃PO₄ | 89.40 % | 0.41 | 0.02 | 0.59 | 0.16% | 90.65 % | 40.00 % | 40.80 % |
| | | | | Li₂Si₂O₅ | | | | | | | | |
| | | | | LiAlSi₄O₁₀ | | | | | | | | |
| S9 | 580 °C/ 180 min | 720 °C/ 90 min | Overall clear and transparent | Li₃PO₄ | 92.50 % | 0.66 | 0.03 | 0.64 | 0.11% | 91.18 % | 42.70 % | 41.60 % |
| | | | | Li₂Si₂O₅ | | | | | | | | |
| | | | | LiAlSi₄O₁₀ | | | | | | | | |
| S10 | 545 °C/ 240 min | 690 °C/ 90 min | Overall clear and transparent | Li₃PO₄ | 94.80 % | 0.35 | 0.01 | 0.58 | 0.18% | 91.20 % | 41.60 % | 41.00 % |
| | | | | Li₂Si₂O₅ | | | | | | | | |
| | | | | LiAlSi₄O₁₀ | | | | | | | | |
| S11 | 530 °C/ 240 min | 675 °C/ 90 min | Overall clear and transparent | Li₃PO₄ | 82.20 % | 0.50 | 0.04 | 0.49 | 0.13% | 91.17 % | 40.80 % | 43.10 % |
| | | | | Li₂Si₂O₅ | | | | | | | | |
| | | | | LiAlSi₄O₁₀ | | | | | | | | |
| S12 | 545 °C/ 240 min | 675 °C/ 90 min | Overall clear and transparent | Li₃PO₄ | 80.50 % | 0.50 | 0.02 | 0.54 | 0.11% | 91.13 % | 36.80 % | 35.60 % |
| | | | | Li₂Si₂O₅ | | | | | | | | |
| | | | | LiAlSi₄O₁₀ | | | | | | | | |
| S13 | 560 °C/ 240 min | 690 °C/ 90 min | Overall clear and transparent | Li₃PO₄ | 89.60 % | 0.67 | 0.02 | 0.46 | 0.15% | 91.00 % | 39.70 % | 40.80 % |
| | | | | Li₂Si₂O₅ | | | | | | | | |
| | | | | LiAlSi₄O₁₀ | | | | | | | | |
| S14 | 545 °C/ 240 min | 695 °C/ 60 min | Overall clear and transparent | Li₃PO₄ | 95.10 % | 0.20 | 0.01 | 0.60 | 0.13% | 91.13 % | 40.50 % | 45.00 % |
| | | | | Li₂Si₂O₅ | | | | | | | | |
| | | | | LiAlSi₄O₁₀ | | | | | | | | |
| S15 | 545 °C/ 240 min | 695 °C/ 90 min | Overall clear and transparent | Li₃PO₄ | 90.50 % | 0.10 | 0.02 | 0.53 | 0.13% | 91.22 % | 41.00 % | 40.90 % |
| | | | | Li₂Si₂O₅ | | | | | | | | |
| | | | | LiAlSi₄O₁₀ | | | | | | | | |
| S16 | 545 °C/ 240 min | 690 °C/ 90 min | Overall clear and transparent | Li₃PO₄ | 86.30 % | 0.80 | 0.02 | 0.58 | 0.09% | 91.21 % | 38.40 % | 43.50 % |
| | | | | Li₂Si₂O₅ | | | | | | | | |
| | | | | LiAlSi₄O₁₀ | | | | | | | | |
| S17 | 545 °C/ 240 min | *705* °C/ 90 min | Overall clear and transparent | Li₃PO₄ | 93.90 % | 0.60 | 0.02 | 0.52 | 0.12% | 91.10 % | 44.60 % | 39.50 % |
| | | | | Li₂Si₂O₅ | | | | | | | | |
| | | | | LiAlSi₄O₁₀ | | | | | | | | |
| S18 | 575 °C/ 300 min | 720 °C/ 90 min | Overall clear and transparent | Li₃PO₄ | 90.30 % | 1.20 | 0.03 | 0.51 | 0.11% | 90.95 % | 45.00 % | 38.20 % |
| | | | | Li₂Si₂O₅ | | | | | | | | |
| | | | | LiAlSi₄O₁₀ | | | | | | | | |
| S19 | 550 °C/ 200 min | 705 °C/ 90 min | Overall clear and transparent | Li₃PO₄ | 91.00 % | 0.80 | 0.02 | 0.49 | 0.15% | 91.03 % | 40.10 % | 41.00 % |
| | | | | Li₂Si₂O₅ | | | | | | | | |
| | | | | LiAlSi₄O₁₀ | | | | | | | | |
| S20 | 570 °C/ 240 min | 710 °C/ 90 min | Overall clear and transparent | Li₃PO₄ | 89.60 % | 0.41 | 0.01 | 0.50 | 0.08% | 91.11 % | 41.00 % | 43.20 % |
| | | | | Li₂Si₂O₅ | | | | | | | | |
| | | | | LiAlSi₄O₁₀ | | | | | | | | |
| S21 | 575 °C/ 300 min | 720 °C/ 90 min | Overall clear and transparent | Li₃PO₄ | 95.80 % | 1.10 | 0.05 | 0.51 | 0.15% | 90.76 % | 41.30 % | 44.80 % |
| | | | | Li₂Si₂O₅ | | | | | | | | |
| | | | | LiAlSi₄O₁₀ | | | | | | | | |
| S22 | 560 °C/ 240min | 695 °C/ 30min | Overall clear and transparent | Li₃PO₄ | 80.00 % | 0.60 | 0.03 | 0.55 | 0.08% | 91.50 % | 40.00 % | 35.90 % |
| | | | | Li₂Si₂O₅ | | | | | | | | |
| | | | | LiAlSi₄O₁₀ | | | | | | | | |
| S23 | 565 °C/ 200 min | *705* °C/ 90 min | Overall clear and transparent | Li₃PO₄ | 90.60 % | 0.84 | 0.03 | 0.69 | 0.13% | 91.23 % | 40.20 % | 40.80 % |
| | | | | Li₂Si₂O₅ | | | | | | | | |
| | | | | LiAlSi₄O₁₀ | | | | | | | | |
| S24 | 570 °C/ 240 min | *705* °C/ 90 min | Overall clear and transparent | Li₃PO₄ | 89.20 % | 0.40 | 0.01 | 0.51 | 0.09% | 91.20 % | 40.70 % | 42.50 % |
| | | | | Li₂Si₂O₅ | | | | | | | | |
| | | | | LiAlSi₄O₁₀ | | | | | | | | |
| S25 | *555* °C/ 240 min | *705* °C/ 90 min | Overall clear and transparent | Li₃PO₄ | 81.60 % | 0.60 | 0.04 | 0.47 | 0.15% | 91.18 % | 40.60 % | 41.30 % |
| | | | | Li₂Si₂O₅ | | | | | | | | |
| | | | | LiAlSi₄O₁₀ | | | | | | | | |
| S26 | *555* °C/ 240 min | *705* °C/ 90 min | Overall clear and transparent | Li₃PO₄ | 85.20 % | 0.50 | 0.03 | 0.60 | 0.12% | 90.59 % | 39.90 % | 40.10 % |
| | | | | Li₂Si₂O₅ | | | | | | | | |
| | | | | LiAlSi₄O₁₀ | | | | | | | | |
| S27 | 550 °C/ 200 min | *705* °C/ 90 min | Overall clear and transparent | Li₃PO₄ | 86.50 % | 1.06 | 0.05 | 0.54 | 0.09% | 91.87 % | 38.90 % | 39.60 % |
| | | | | Li₂Si₂O₅ | | | | | | | | |
| | | | | LiAlSi₄O₁₀ | | | | | | | | |
| S28 | 550 °C/ 240 min | *710* °C/ 90 min | Overall clear and transparent | Li₃PO₄ | 90.20 % | 1.53 | 0.06 | 0.62 | 0.11% | 90.86 % | 40.50 % | 40.10 % |
| | | | | Li₂Si₂O₅ | | | | | | | | |
| | | | | LiAlSi₄O₁₀ | | | | | | | | |

**Table 5**

| Example No. | Salt bath for strengthening | Salt bath temperature/ chemical strengthening time | Surface Na₂O concentration /wt% | CS_50/ MPa | \|CT_AV\| /MPa | DOL_0/ µm | The number of drops until breakage in the 1.0 m fixed-point height drop test |
|---|---|---|---|---|---|---|---|
| S1 | 30 wt% NaNO₃ + 70 wt% KNO₃ + 0.03 wt% LiNO₃ | 470 °C/7 h | 8.7 | 145 | 84 | 132 | 54 |
| S2 | 30 wt% NaNO₃ + 70 wt% KNO₃ + 0.03 wt% LiNO₃ | 470 C/7 h | 9.1 | 137 | 106 | 126 | >50 |
| S3 | 30 wt% NaNO₃ + 70 wt% KNO₃ + 0.03 wt% LiNO₃ | 470 °C/7 h | 9.8 | 149 | 101 | 134 | >50 |
| S4 | 30 wt% NaNO₃ + 70 wt% KNO₃ + 0.03 wt% LiNO₃ | 470 °C/7 h | 10.6 | 158 | 114 | 129 | >50 |
| S5 | 30 wt% NaNO₃ + 70 wt% KNO₃ + 0.03 wt% LiNO₃ | 470 °C/7 h | 8.5 | 127 | 107 | 131 | >50 |
| S6 | 30 wt% NaNO₃ + 70 wt% KNO₃ + 0.03 wt% LiNO₃ | 470 °C/7 h | 12.5 | 153 | 107 | 134 | 61 |
| S7 | 30 wt% NaNO₃ + 70 wt% KNO₃ + 0.03 wt% LiNO₃ | 470 °C/7 h | 16.8 | 180 | 108 | 132 | >50 |
| S8 | 30 wt% NaNO₃ + 70 wt% KNO₃ + 0.03 wt% LiNO₃ | 470 °C/7 h | 12.4 | 150 | 114 | 135 | >50 |
| S9 | 30 wt% NaNO₃ + 70 wt% KNO₃ + 0.03 wt% LiNO₃ | 470 °C/7 h | 9.8 | 131 | 108 | 125 | >50 |
| S10 | 30 wt% NaNO₃ + 70 wt% KNO₃ + 0.03 wt% LiNO₃ | 470 °C/7 h | 13 | 186 | 96 | 135 | >50 |
| S11 | 30 wt% NaNO₃ + 70 wt% KNO₃ + 0.03 wt% LiNO₃ | 470 °C/7 h | 9.4 | 189 | 95 | 130 | 55 |
| S12 | 30 wt% NaNO₃ + 70 wt% KNO₃ + 0.03 wt% LiNO₃ | 470 °C/7 h | 8.6 | 131 | 86 | 141 | >50 |
| S13 | 30 wt% NaNO₃ + 70 wt% KNO₃ + 0.03 wt% LiNO₃ | 470 °C/7 h | 7.8 | 110 | 90 | 120 | >50 |
| S14 | 30 wt% NaNO₃ + 70 wt% KNO₃ + 0.03 wt% LiNO₃ | 470 °C/7 h | 9.4 | 127 | 126 | 139 | >50 |
| S15 | 30 wt% NaNO₃ + 70 wt% KNO₃ + 0.03 wt% LiNO₃ | 470 °C/7 h | 10.6 | 157 | 109 | 125 | >50 |
| S16 | 30 wt% NaNO₃ + 70 wt% KNO₃ + 0.03 wt% LiNO₃ | 470 °C/7 h | 11.5 | 125 | 100 | 124 | >50 |
| S17 | 30 wt% NaNO₃ + 70 wt% KNO₃ + 0.03 wt% LiNO₃ | 470 °C/7 h | 12 | 148 | 85 | 132 | >50 |
| S18 | 30 wt% NaNO₃ + 70 wt% KNO₃ + 0.03 wt% LiNO₃ | 470 °C/7 h | 8.4 | 155 | 94 | 129 | >50 |
| S19 | 30 wt% NaNO₃ + 70 wt% KNO₃ + 0.03 wt% LiNO₃ | 470 °C/7 h | 8.9 | 139 | 127 | 123 | >50 |
| S20 | 30 wt% NaNO₃ + 70 wt% KNO₃ + 0.03 wt% LiNO₃ | 470 °C/7 h | 8.5 | 191 | 122 | 124 | >50 |
| S21 | 30 wt% NaNO₃ + 70 wt% KNO₃ + 0.03 wt% LiNO₃ | 470 °C/7 h | 12 | 180 | 133 | 135 | 60 |
| S22 | 30 wt% NaNO₃ + 70 wt% KNO₃ + 0.03 wt% LiNO₃ | 470 °C/7 h | 10.1 | 198 | 106 | 130 | >50 |
| S23 | 30 wt% NaNO₃ + 70 wt% KNO₃ + 0.03 wt% LiNO₃ | 470 °C/7 h | 10.5 | 145 | 95 | 134 | 54 |
| S24 | 30 wt% NaNO₃ + 70 wt% KNO₃ + 0.03 wt% LiNO₃ | 470 °C/7 h | 8.4 | 179 | 101 | 134 | >50 |
| S25 | 30 wt% NaNO₃ + 70 wt% KNO₃ + 0.03 wt% LiNO₃ | 470 °C/7 h | 8.9 | 172 | 97 | 132 | >50 |
| S26 | 30 wt% NaNO₃ + 70 wt% KNO₃ + 0.03 wt% LiNO₃ | 470 °C/7 h | 13.5 | 188 | 91 | 136 | >50 |
| S27 | 30 wt% NaNO₃ + 70 wt% KNO₃ + 0.03 wt% LiNO₃ | 470 °C/7 h | 7.8 | 158 | 103 | 129 | >50 |
| S28 | 30 wt% NaNO₃ + 70 wt% KNO₃ + 0.03 wt% LiNO₃ | 470 °C/7 h | 7.9 | 176 | 94 | 135 | 56 |

| | | | | | | | |
|---|---|---|---|---|---|---|---|
| Note: In Table 5, ">50" indicates that the sample did not break after 50 drops; the interpretation is the same for other similar notations. The interpretation in the corresponding tables for the Comparative Examples follows the same principle. | | | | | | | |

**Table 6**

| Composition (mol%) | SiO₂ | Al₂O₃ | P₂O₅ | ZrO₂ | Na₂O | K₂O | Li₂O | CaO | B₂O₃ |
|---|---|---|---|---|---|---|---|---|---|
| D1 | 71.46 | 4.24 | 1.05 | 2.72 | 0.30 | 0.08 | 19.03 | 0.82 | 0.30 |
| D2 | 66.73 | 3.80 | 0.92 | 2.50 | 0.20 | 0.08 | 25.00 | 0.77 | 0.00 |
| D3 | 69.43 | 4.13 | 0.80 | 2.64 | 0.29 | 0.08 | 21.53 | 0.80 | 0.30 |
| D4 | 68.94 | 4.09 | 1.80 | 2.62 | 0.29 | 0.08 | 21.09 | 0.79 | 0.30 |
| D5 | 68.43 | 4.06 | 1.00 | 2.60 | 0.29 | 0.08 | 21.22 | 0.78 | 1.54 |
| D6 | 68.66 | 4.07 | 1.01 | 3.60 | 0.20 | 0.08 | 21.29 | 0.79 | 0.30 |
| D7 | 69.77 | 4.22 | 1.24 | 2.71 | 0.32 | 0.08 | 20.47 | 0.83 | 0.36 |
| D8 | 68.65 | 4.07 | 1.01 | 2.61 | 0.29 | 0.99 | 21.29 | 0.79 | 0.30 |
| D9 | 68.90 | 4.15 | 1.00 | 2.60 | 0.25 | 0.10 | 21.00 | 1.80 | 0.20 |
| D10 | 68.76 | 4.06 | 2.00 | 2.58 | 0.29 | 0.08 | 21.19 | 0.78 | 0.26 |
| D11 | 70.10 | 4.27 | 0.83 | 1.75 | 1.48 | 0.00 | 21.42 | 0.00 | 0.15 |
| D12 | 71.00 | 4.00 | 1.00 | 2.00 | 0.00 | 0.00 | 22.00 | 0.00 | 0.00 |
| D13 | 69.11 | 5.00 | 1.00 | 2.45 | 0.29 | 0.08 | 21.17 | 0.6 | 0.30 |

**Table 7**

| Comparative Example Nos. | (Li₂O + Na₂O + K₂O + B₂O₃) / (P₂O₅ + ZrO₂+ CaO) | Li₂O / P₂O₅ | P₂O₅ × (CaO + ZrO₂ + Li₂O + Al₂O₃) / (Na₂O + K₂O + B₂O₃) | 2 × Li₂O / (0.5 × ZrO₂ + CaO) |
|---|---|---|---|---|
| D1 | 4.294 | 18.124 | 0.414 | 17.459 |
| D2 | 6.033 | 27.174 | 1.054 | 24.752 |
| D3 | 5.236 | 26.913 | 0.347 | 20.311 |
| D4 | 4.177 | 11.717 | 0.768 | 20.086 |
| D5 | 5.281 | 21.220 | 0.150 | 20.404 |
| D6 | 4.050 | 21.079 | 0.518 | 16.440 |
| D7 | 4.441 | 16.508 | 0.461 | 18.737 |
| D8 | 5.186 | 21.079 | 0.184 | 20.325 |
| D9 | 3.991 | 21.000 | 0.537 | 13.548 |
| D10 | 4.071 | 10.595 | 0.908 | 20.473 |
| D11 | 8.934 | 25.807 | 0.140 | 48.960 |
| D12 | 7.333 | 22.000 | / | 44.000 |
| D13 | 5.393 | 21.170 | 0.436 | 23.200 |

**Table 8**

| Comparative Example Nos. | Tg/ °C | T₁/°C | T₂/°C | T₂-T₁/°C | The sum S of the integrated areas of the exothermic peak and the endothermic peak | The content of quartz crystalline phase at T₁₋₆₀ | The content of quartz crystalline phase at T₁₋₃₀ |
|---|---|---|---|---|---|---|---|
| D1 | 549.0 | 750.6 | No corresponding peak | Absent | 23.800 | 5.30% | 16.59% |
| D2 | 543.0 | 747.0 | 778.4 | 31.4 | 35.454 | 7.90% | 18.75% |
| D3 | 541.0 | 744.7 | No corresponding peak | Absent | 40.625 | 10.60% | 25.90% |
| D4 | 545.0 | 731.0 | 778.8 | 47.8 | 45.049 | 12.30% | 23.16% |
| D5 | 529.0 | 700.0 | 728.0 | 28 | 68.325 | 11.50% | 24.30% |
| D6 | 530.0 | 742.0 | 781.5 | 39.5 | 103.200 | 10.90% | 26.90% |
| D7 | 546.0 | 718.5 | 751.0 | 32.5 | 15.360 | 0.00% | 15.65% |
| D8 | 540.0 | 709.0 | 742.5 | 33.5 | 50.819 | 8.40% | 17.40% |
| D11 | 490.0 | 660.0 | 742.0 | 82 | 0.000 | 0.00% | 0.00% |
| D12 | 530.0 | 699.0 | 742.0 | 43 | 0.000 | 5.10% | 0.00% |

**Table 9**

| Comparative Example Nos. | Appearance of the base glass brick | Appearance of the glass-ceramic brick | Crystalline phase composition in the glass-ceramic | The content of the petalite crystalline phase in the glass-ceramic, wt%. | The content of the lithium disilicate crystalline phase in the glass-ceramic, wt% |
|---|---|---|---|---|---|
| D1 | Overall bluish and transparent | Uneven crystallization and partial cracking | SiO₂ | 26.80% | 31.00% |
| | | | Li₃PO₄ | | |
| | | | Li₂Si₂O₅ | | |
| | | | LiAlSi₄O₁₀ | | |
| D2 | Overall clear and transparent | Overall bluish, hazy | SiO₂ | 23.50% | 30.00% |
| | | | Li₃PO₄ | | |
| | | | Li₂SiO₃ | | |
| | | | Li₂Si₂O₅ | | |
| | | | LiAlSi₂O₆ | | |
| | | | LiAlSi₄O₁₀ | | |
| D3 | Overall bluish and transparent | Uneven crystallization and partial cracking | SiO₂ | 29.80% | 30.50% |
| | | | Li₃PO₄ | | |
| | | | LiAlSi₂O₆ | | |
| | | | Li₂Si₂O₅ | | |
| | | | LiAlSi₄O₁₀ | | |
| D4 | Overall bluish and transparent | Uneven crystallization and partial cracking | SiO₂ | 26.40% | 29.60% |
| | | | Li₃PO₄ | | |
| | | | Li₂Si₂O₅ | | |
| | | | LiAlSi₄O₁₀ | | |
| D5 | Overall clear and transparent | Overall bluish, hazy | SiO₂ | 27.70% | 30.60% |
| | | | Li₃PO₄ | | |
| | | | Li₂Si₂O₅ | | |
| | | | LiAlSi₄O₁₀ | | |
| D6 | Slightly blurred, milky white | Uneven crystallization and partial cracking | SiO₂ | 28.60% | 35.60% |
| | | | Li₃PO₄ | | |
| | | | Li₂Si₂O₅ | | |
| | | | LiAlSi₄O₁₀ | | |
| D7 | Overall bluish and transparent | Uneven crystallization and partial cracking | SiO₂ | 30.80% | 26.00% |
| | | | Li₃PO₄ | | |
| | | | Li₂Si₂O₅ | | |
| | | | LiAlSi₄O₁₀ | | |
| D8 | Overall bluish and transparent | Uneven crystallization and partial cracking | SiO₂ | 30.60% | 28.40% |
| | | | Li₃PO₄ | | |
| | | | Li₂Si₂O₅ | | |
| | | | LiAlSi₄O₁₀ | | |
| D9 | Translucent milky white | / | / | / | / |
| D10 | Translucent milky white | / | / | / | / |
| D11 | Overall clear and transparent | Overall clear and transparent | Li₃PO₄ | 38.60% | 38.60% |
| | | | Li₂Si₂O₅ | | |
| | | | LiAlSi₄O₁₀ | | |
| D12 | Overall clear and transparent | Overall clear and transparent | Li₃PO₄ | 39.50% | 43.50% |
| | | | Li₂Si₂O₅ | | |
| | | | LiAlSi₄O₁₀ | | |
| D13 | Milky appearance with unmelted inclusions | / | / | / | / |

**Table 10**

| Comparative Example Nos. | Crystallinity | The difference between the maximum b-value and the minimum b-value at nine locations; the glass-ceramic with a thickness of 30 mm | The difference between the maximum b-value and the minimum b-value at nine locations; the glass-ceramic with a thickness of 0.6 mm | The average of b-values at nine locations; the glass-ceramic with a thickness of 0.6 mm | Haze; the glass-ceramic with a thickness of 0.6 mm | Transmittance; the glass-ceramic with a thickness of 0.6 mm (at a wavelength of 550 nm) |
|---|---|---|---|---|---|---|
| D1 | 76.50% | 5.30 | 1.03 | 1.00 | 0.26% | 90.48% |
| D2 | 85.90% | 2.80 | 0.45 | 2.10 | 0.36% | 90.10% |
| D3 | 89.60% | 4.21 | 0.83 | 0.94 | 0.20% | 90.28% |
| D4 | 93.20% | 5.96 | 0.62 | 0.86 | 0.26% | 90.27% |
| D5 | 95.00% | 5.10 | 0.42 | 1.45 | 0.30% | 88.20% |
| D6 | 94.30% | 4.94 | 0.87 | 1.58 | 0.23% | 89.88% |
| D7 | 78.30% | 3.94 | 0.89 | 0.95 | 0.50% | 90.70% |
| D8 | 74.60% | 3.22 | 0.51 | 0.98 | 0.34% | 89.40% |
| D11 | 86.70% | 0.98 | 0.02 | 0.75 | 0.20% | 90.87% |
| D12 | 90.50% | 1.70 | 0.16 | 0.88 | 0.24% | 90.16% |

**Table 11**

| Comparative Example Nos. | Salt bath for strengthening | Salt bath temperature/ chemical strengthening time | CS_50/MPa | \|CT_AV\|/MPa | DOL_0/µm | The number of drops until breakage in the 1.0 m fixed-point height drop test |
|---|---|---|---|---|---|---|
| D1 | 30 wt% NaNO₃ + 70 wt% KNO₃ + 0.03 wt% LiNO₃ | 470 °C/7 h | 100 | 78 | 129 | 10 |
| D2 | 30 wt% NaNO₃ + 70 wt% KNO₃ + 0.03 wt% LiNO₃ | 470 °C °C/7 h | 120 | 99 | 136 | <10 |
| D3 | 30 wt% NaNO₃ + 70 wt% KNO₃ + 0.03 wt% LiNO₃ | 470 °C/7 h | 95 | 82 | 135 | <5 |
| D4 | 30 wt% NaNO₃ + 70 wt% KNO₃ + 0.03 wt% LiNO₃ | 470 °C/7 h | 93 | 81 | 129 | <5 |
| D5 | 30 wt% NaNO₃ + 70 wt% KNO₃ + 0.03 wt% LiNO₃ | 470 °C/7 h | 101 | 98 | 135 | <5 |
| D6 | 30 wt% NaNO₃ + 70 wt% KNO₃ + 0.03 wt% LiNO₃ | 470 °C/7 h | 105 | 81 | 132 | 26 |
| D7 | 30 wt% NaNO₃ + 70 wt% KNO₃ + 0.03 wt% LiNO₃ | 470 °C/7 h | 102 | 86 | 136 | <5 |
| D8 | 30 wt% NaNO₃ + 70 wt% KNO₃ + 0.03 wt% LiNO₃ | 470 °C/7 h | 98 | 67 | 122 | <5 |
| D11 | 30 wt% NaNO₃ + 70 wt% KNO₃ + 0.03 wt% LiNO₃ | 470 °C/7 h | 120 | 42 | 137 | 1 |
| D12 | 30 wt% NaNO₃ + 70 wt% KNO₃ + 0.03 wt% LiNO₃ | 470 °C/7 h | 117 | 49 | 140 | 1 |

Based on the results of the Examples from Table 1 to Table 5 and the Comparative Examples from Table 6 to Table 11 as described above, it can be seen that compared with the Comparative Examples, the solutions of the Examples of the present disclosure satisfy the compositional characteristics of: 18.200 ≤ Li₂O / P₂O₅ ≤ 25.500; and 14.000 ≤ 2 × Li₂O / (0.5 × ZrO₂ + CaO) ≤ 23.000, while satisfying the content range of each oxide, the prepared large-sized base glass brick has a clear and transparent appearance, and at least two exothermic peaks exist at suitable temperatures in the heating DSC curve of the base glass tested by the simultaneous thermal analysis, and the sum S of the integrated areas of the exothermic peak and the endothermic peak in the cooling DSC curve of the base glass is ≤ 10. The appearance of the glass-ceramic bricks obtained by heat treatment of these base glass bricks are all transparent and clear, and the glass-ceramic brick does not exhibit cracking. The prepared glass-ceramics do not comprise quartz crystalline phase in the crystalline phase, and the difference between the maximum b-value and the minimum b-value at nine locations on the main surface of the glass-ceramics is low. By adopting the solutions of the Examples of the present disclosure, large-sized glass-ceramic bricks with excellent and uniform optical performance can be mass-produced. Meanwhile, a chemically strengthened glass-ceramic can be prepared that simultaneously achieves all of excellent optical performance, high CS_50, |CT_AV|, DOL_0, and excellent drop resistance.

In contrast, in the solutions of Comparative Examples 1 to 8, the formulations of the base glass do not simultaneously satisfy: the content range of each oxide according to the present disclosure, as well as 18.200 ≤ Li₂O / P₂O₅ ≤ 25.500; and 14.000 ≤ 2 × Li₂O / (0.5 × ZrO₂ + CaO) ≤ 23.000. After the large-sized glass-ceramic bricks are prepared by heat treatment, the optical performance deteriorates (mainly manifested as large differences in b-values between different areas, and the glass bricks exhibiting undesirable colors), or brick cracking is prone to occur. In the solutions of Comparative Examples 9 to 10, after preparing the large-sized base glass bricks, milky white precipitates directly appear in the base glass bricks, resulting in deterioration of the optical performance, and a decrease in the transmittance. In the solutions of Comparative Examples 11 to 12, the mass-produced glass-ceramics, after chemical strengthening treatment, cannot achieve the desired excellent mechanical performance, and the drop resistance effect is inferior to that of the products of the present disclosure. In the solution of Comparative Example 13, milky appearance with unmelted inclusions appears in the prepared large-sized base glass bricks.

The preferred embodiments of the present disclosure have been described in detail above, but the present disclosure is not limited to these.

### Industrial Applicability

By optimizing the glass formulation, the present disclosure employs a glass formulation that meets specific composition requirements, particularly the content of oxides and the relationship between the specific content of oxides under the specific conditions. This can solve the issue that glass-ceramic bricks tend to crack during the mass production of large-size transparent glass-ceramics with petalite and lithium disilicate as the main crystalline phase. Meanwhile, it can ensure that the prepared transparent glass-ceramics have both excellent optical and strength performances, and ensure that the display effect can meet the requirements.

Among them, the content of oxides and the relationship between the specific content of oxides under the specific conditions satisfied by the technical solution of the present disclosure can not only ensure the formation of petalite and lithium disilicate as the main crystalline phase, but also avoid issues such as overall bluish, hazy, or even cracking of the glass-ceramic brick during the preparation of glass-ceramic brick from large-size base glass brick while ensuring good melting conditions of the base glass brick. This is beneficial for the transparent glass-ceramic to obtain excellent optical performance and strength, so that the overall display effect of the transparent glass-ceramic can meet the application requirements of display screen cover plates. Meanwhile, after the transparent glass-ceramic of the present disclosure is subjected to chemical strengthening treatment, a chemically strengthened glass-ceramic with high strength can be obtained, which has been verified to have excellent drop resistance.

It has been verified that under the large-size dimension, the difference between the maximum b-value and the minimum b-value at nine locations on the main surface of the transparent glass-ceramic prepared by the technical solution of the present disclosure is ≤ 2.00; under the small-size dimension, the difference between the maximum b-value and the minimum b-value at nine locations on the main surface of the transparent glass-ceramic prepared by the technical solution of the present disclosure is ≤ 0.30, preferably ≤ 0.10. This indicates that whether it is a large-size dimension or a small-size dimension, the difference in b-values between different areas on the main surface of the transparent glass-ceramic of the present disclosure is small, the optical performance of the transparent glass-ceramic is good, and the overall display effect can meet the application requirements of display screen cover plates. Furthermore, under the large-size dimension, the glass-ceramic can achieve uniform b-values, which help to ensure a high product yield.

According to the present disclosure, the large-sized base glass bricks employing a base glass formulation satisfying specific DSC curve characteristics, when subjected to heat treatment under the process conditions of mass production line for glass-ceramics, can produce transparent glass-ceramic bricks with optical performance and display effects meeting the application requirements for display screens. This can well solve the issues in the prior art during mass production of the glass-ceramic bricks, such as cracking of the glass brick, significant differences in b-values between different areas of the glass brick, locally presenting undesired colors, uneven coloration, and poor display performance. Therefore, before preparing large-sized glass-ceramic bricks, small glass samples can be prepared according to the glass formulation. Based on the obtained DSC curve characteristics, it can be verified in advance whether the glass formulation is suitable for producing large-sized glass-ceramic products, especially qualified large-thickness glass-ceramic products. If not, adjustments can be made in a timely manner until the specific DSC curve characteristics are satisfied, and then the preparation of large-sized products can be carried out. This can greatly save time and costs and effectively avoid the waste of resources.

## Claims

1. A transparent glass-ceramic, comprising a petalite crystalline phase and a lithium disilicate crystalline phase, wherein the petalite crystalline phase and the lithium disilicate crystalline phase have a higher weight percentage than other crystalline phases present in the transparent glass-ceramic;
based on molar percentage of oxides, a composition of the transparent glass-ceramic comprises:
SiO₂: 60.90 mol% to 72.65 mol%, Al₂O₃: 1.50 mol% to 5.00 mol%, P₂O₅: 0.85 mol% to 1.50 mol%, ZrO₂: 2.00 mol% to 4.00 mol%, Na₂O: 0.00 mol% to 1.00 mol%, K₂O: 0.00 mol% to 0.50 mol%, Li₂O: 20.00 mol% to 30.00 mol%, CaO: 0.00 mol% to 1.60 mol%, and B₂O₃: 0.00 mol% to 1.00 mol%;
based on a content expressed as the molar percentage of each oxide in the composition of the transparent glass-ceramic, the composition of the transparent glass-ceramic satisfies: $18.200 \leq {Li}_{2} O / {P}_{2} {O}_{5} \leq 25.500 ;$ and $14.000 \leq 2 \times {Li}_{2} O / \left(0.5\times {ZrO}_{2}+CaO\right) \leq 23.000 .$

2. The transparent glass-ceramic according to claim 1, wherein, based on the content expressed as the molar percentage of each oxide in the composition of the transparent glass-ceramic, the composition of the transparent glass-ceramic satisfies: $4.100 \leq \left({Li}_{2}O+{Na}_{2}O+{K}_{2}O+{B}_{2}{O}_{3}\right) / \left({P}_{2}{O}_{5}+{ZrO}_{2}+CaO\right) \leq 6.000 ;$ and/or, $0.100 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 0.900 ,$ preferably, 0.19 ≤ P₂O₅ ×(CaO + ZrO₂ + Li₂O + Al₂O₃)/(Na₂O + K₂O + B₂O₃) ≤ 0.900.

3. The transparent glass-ceramic according to claim 1 or 2, wherein, based on the molar percentage of oxides, the composition of the transparent glass-ceramic comprises:
SiO₂: 67.50 mol% to 71.00 mol%, Al₂O₃: 3.50 mol% to 5.00 mol%, P₂O₅: 0.85 mol% to 1.50 mol%, ZrO₂: 2.50 mol% to 3.50 mol%, Na₂O: 0.00 mol% to 1.00 mol%, K₂O: greater than 0.00 mol% and not greater than 0.50 mol%, Li₂O: 20.00 mol% to 25.00 mol%, CaO: greater than 0.50 mol% and not greater than 1.60 mol%, and B₂O₃: 0.00 mol% to 1.00 mol%.

4. The transparent glass-ceramic according to any one of claims 1 to 3, wherein the transparent glass-ceramic does not comprise a quartz crystalline phase.

5. The transparent glass-ceramic according to any one of claims 1 to 4, wherein a crystallinity of the transparent glass-ceramic is ≥ 70.00 wt%, preferably, the crystallinity is ≥ 80.00 wt%; and in the transparent glass-ceramic, an average crystal size is less than or equal to 100 nm.

6. The transparent glass-ceramic according to any one of claims 1 to 5, wherein, in the transparent glass-ceramic, the petalite crystalline phase accounts for 35.00 wt% to 50.00 wt% of a mass of the transparent glass-ceramic, and the lithium disilicate crystalline phase accounts for 35.00 wt% to 50.00 wt% of the mass of the transparent glass-ceramic.

7. The transparent glass-ceramic according to any one of claims 1 to 6, wherein the transparent glass-ceramic further comprises one or more selected from the group consisting of a lithium metasilicate crystalline phase, a lithium phosphate crystalline phase, and a spodumene crystalline phase as a secondary crystalline phase.

8. The transparent glass-ceramic according to claim 7, wherein, in the transparent glass-ceramic, the secondary crystalline phase accounts for less than or equal to 30.00 wt% of the mass of the transparent glass-ceramic, preferably, the secondary crystalline phase accounts for less than or equal to 10.00 wt% of the mass of the transparent glass-ceramic.

9. The transparent glass-ceramic according to any one of claims 1 to 8, wherein, when the transparent glass-ceramic has a dimension of (200 mm to 500 mm) × (100 mm to 500 mm) × (10 mm to 40 mm) in length, width, and thickness, a difference between a maximum b-value and a minimum b-value at nine locations on a main surface of the transparent glass-ceramic is ≤ 2.00, preferably ≤ 1.50, and more preferably ≤ 1.00;
wherein, the nine locations are respectively: (1) four locations corresponding to test circles I tangent to the long sides and the adjacent short sides of the main surface; (2) four locations corresponding to test circles II each centered at points on line segments connecting centers of the four test locations of test circles I, the points being closest to midpoints of long sides or short sides of the main surface; (3) one location corresponding to test circle III centered at a center point of the main surface.

10. The transparent glass-ceramic according to any one of claims 1 to 8, wherein, when the transparent glass-ceramic has a dimension of (45 mm to 450 mm) × (45 mm to 350 mm) × (0.4 mm to 2.0 mm) in length, width, and thickness, a difference between a maximum b-value and a minimum b-value at nine locations on the main surface of the transparent glass-ceramic is ≤ 0.30, preferably ≤ 0.10, and more preferably ≤ 0.06;
wherein, the nine locations are respectively: (1) four locations corresponding to test circles I tangent to the long sides and the adjacent short sides of the main surface; (2) four locations corresponding to test circles II each centered at points on line segments connecting centers of the four test locations of test circles I, the points being closest to midpoints of long sides or short sides of the main surface; (3) one location corresponding to test circle III centered at a center point of the main surface.

11. The transparent glass-ceramic according to any one of claims 1 to 10, wherein, when the thickness of the transparent glass-ceramic is 0.6 mm, the b-value is ≤ 1.00, preferably the b-value is ≤ 0.70, a haze is ≤ 0.25%, preferably the haze is ≤ 0.18%, and a transmittance of the transparent glass-ceramic at a wavelength of 550 nm is ≥ 90.00%;
preferably, when the thickness of the transparent glass-ceramic is 0.6 mm, the b-value is ≤ 0.60, the haze is ≤ 0.16%, and the transmittance of the transparent glass-ceramic at a wavelength of 550 nm is ≥ 90.50%.

12. A base glass capable of being subjected to heat treatment to prepare the transparent glass-ceramic according to any one of claims 1 to 11, wherein, based on molar percentage of oxides, a composition of the base glass comprises:
SiO₂: 60.90 mol% to 72.65 mol%, Al₂O₃: 1.50 mol% to 5.00 mol%, P₂O₅: 0.85 mol% to 1.50 mol%, ZrO₂: 2.00 mol% to 4.00 mol%, Na₂O: 0.00 mol% to 1.00 mol%, K₂O: 0.00 mol% to 0.50 mol%, Li₂O: 20.00 mol% to 30.00 mol%, CaO: 0.00 mol% to 1.60 mol%, and B₂O₃: 0.00 mol% to 1.00 mol%;
based on a content expressed as molar percentage of each oxide in the composition of the base glass, the composition of the base glass satisfies: $18.200 \leq {Li}_{2} O / {P}_{2} {O}_{5} \leq 25.500 ;$ and $14.000 \leq 2 \times {Li}_{2} O / \left(0.5\times {ZrO}_{2}+CaO\right) \leq 23.000 .$

13. The base glass according to claim 12, wherein, based on the content expressed as the molar percentage of each oxide in the composition of the base glass, the composition of the base glass satisfies: $4.100 \leq \left({Li}_{2}O+{Na}_{2}O+{K}_{2}O+{B}_{2}{O}_{3}\right) / \left({P}_{2}{O}_{5}+{ZrO}_{2}+CaO\right) \leq 6.000 ;$ and/or, $0.100 \leq {P}_{2} {O}_{5} \times \left(CaO+{ZrO}_{2}+{Li}_{2}O+{Al}_{2}{O}_{3}\right) / \left({Na}_{2}O+{K}_{2}O+{B}_{2}{O}_{3}\right) \leq 0.900 ,$ preferably, 0.19 ≤ P₂O₅ ×(CaO + ZrO₂ + Li₂O + Al₂O₃)/(Na₂O + K₂O + B₂O₃) ≤ 0.900.

14. The base glass according to claim 12 or 13, wherein, as tested by simultaneous thermal analysis, under a protective atmosphere of nitrogen, the base glass is heated from room temperature to 900 °C at a heating rate of 10 °C/min to obtain a heating DSC curve, in the heating DSC curve, at least two exothermic peaks exist, wherein a first exothermic peak temperature T₁ is 600 °C to 730 °C, a second exothermic peak temperature T₂ is 740 °C to 800 °C, and T₁ and T₂ satisfy the following relationship: 100°C ≥ T₂ - T₁ ≥ 40°C, preferably 80°C ≥ T₂ - T₁ ≥ 50°C.

15. The base glass according to any one of claims 12 to 14, wherein, as tested by simultaneous thermal analysis, under a protective atmosphere of nitrogen, the base glass is heated from room temperature to 1400 °C at a heating rate of 10 °C/min, held for 10 min, and then cooled from 1400 °C to 450 °C at a cooling rate of 10 °C/min to obtain a cooling DSC curve, in the cooling DSC curve, a sum of integrated areas of an exothermic peak and an endothermic peak comprised therein within a range of 500 °C to 900 °C is S, and S ≤ 10, preferably no endothermic peak and/or no exothermic peak is present, more preferably S = 0.

16. The base glass according to any one of claims 12 to 15, wherein, when the base glass is heated from room temperature to a temperature of T₁₋₃₀ at a heating rate of 10 °C/min and held for 240 min for treatment, in a product obtained after treatment, a content of a quartz crystalline phase is less than 15 wt%, wherein, T₁₋₃₀ = T₁ - 30 °C; and/or,
when the base glass is heated from room temperature to a temperature of T₁₋₆₀ at a heating rate of 10 °C/min and held for 240 min for treatment, in a product obtained after treatment, a content of the quartz crystalline phase is less than 5 wt%, preferably no quartz crystalline phase is present, wherein, T₁₋₆₀ = T₁ - 60 °C.

17. A chemically strengthened glass-ceramic, wherein a composition at a center of the chemically strengthened glass-ceramic is the same as the composition of the transparent glass-ceramic according to any one of claims 1 to 11, and the chemically strengthened glass-ceramic comprises a compressive stress layer and a tensile stress layer.

18. The chemically strengthened glass-ceramic according to claim 17, wherein the chemically strengthened glass-ceramic is obtained by subjecting the transparent glass-ceramic according to any one of claims 1 to 11 to chemical strengthening treatment, wherein a salt bath for the chemical strengthening treatment is a mixed molten salt, a composition of the mixed molten salt comprises: 0 < NaNO₃ < 100 wt%, 0 < KNO₃ < 100 wt%, and 0 < LiNO₃ ≤ 0.2 wt%; a temperature of the salt bath for the chemical strengthening treatment is 430 °C to 530 °C, and a time of the chemical strengthening treatment is 0.5 h to 15.0 h.

19. The chemically strengthened glass-ceramic according to any one of claims 17 to 18, wherein the chemically strengthened glass-ceramic has a CS_50 of 110 MPa to 200 MPa, and the CS_50 refers to the compressive stress value at a depth of 50 µm from a main surface of the chemically strengthened glass-ceramic; and/or,
the chemically strengthened glass-ceramic has a |CT_AV| of 84 MPa to 140 MPa, and the |CT_AV| refers to an absolute value of an average tensile stress.

20. The chemically strengthened glass-ceramic according to any one of claims 17 to 19, wherein a depth DOL_0 of the compressive stress layer of the chemically strengthened glass-ceramic is 0.18t to 0.25t, and t is a thickness of the chemically strengthened glass-ceramic.

21. The chemically strengthened glass-ceramic according to any one of claims 17 to 20, wherein, when the chemically strengthened glass-ceramic with a thickness of 0.6 mm is subjected to multiple fixed-point height drop tests using a 120-mesh sandpaper at a fixed-point height of 1.0 m, a number of drops until breakage of the chemically strengthened glass-ceramic is ≥ 30, and preferably ≥ 50.

22. A glass device, comprising the transparent glass-ceramic according to any one of claims 1 to 11 or the chemically strengthened glass-ceramic according to any one of claims 17 to 21.

23. An electronic device, comprising the transparent glass-ceramic according to any one of claims 1 to 11 or comprising the chemically strengthened glass-ceramic according to any one of claims 17 to 21.
